Europäisches Patentamt

European Patent Office

Office européen des brevets

(19)

(11) **EP 0 808 206 B2**

(12) **NEUE EUROPÄISCHE PATENTSCHRIFT**

(45) Veröffentlichungstag und Bekanntmachung des Hinweises auf die Entscheidung über den Einspruch:
**28.06.2006 Patentblatt 2006/26**

(45) Hinweis auf die Patenterteilung:
**21.10.1998 Patentblatt 1998/43**

(21) Anmeldenummer: **96904050.0**

(22) Anmeldetag: **09.02.1996**

(51) Int Cl.:
**B01D 35/143** $^{(2006.01)}$   **B01D 37/04** $^{(2006.01)}$

(86) Internationale Anmeldenummer:
**PCT/EP1996/000560**

(87) Internationale Veröffentlichungsnummer:
**WO 1996/024426 (15.08.1996 Gazette 1996/37)**

(54) **VERFAHREN UND VORRICHTUNG ZUM KOSTENORIENTIERTEN BETRIEB EINER KONDITIONIERVORRICHTUNG, INSBESONDERE EINES FILTERS**

PROCESS AND DEVICE FOR COST-ORIENTED OPERATION OF A CONDITIONING DEVICE, PARTICULARLY A FILTER

PROCEDE ET DISPOSITIF PERMETTANT D'EXPLOITER EN TENANT COMPTE DES COUTS UN DISPOSITIF DE CONDTIONNEMENT, EN PARTICULIER UN FILTRE

(84) Benannte Vertragsstaaten:
**DE FR GB IT**

(30) Priorität: **10.02.1995 DE 19504327**

(43) Veröffentlichungstag der Anmeldung:
**26.11.1997 Patentblatt 1997/48**

(73) Patentinhaber: **ultrafilter international AG**
**42781 Haan (DE)**

(72) Erfinder: **EIMER, Klaus**
**D-40883 Ratingen (DE)**

(74) Vertreter: **König, Gregor Sebastian et al**
**König Szynka Tilmann von Renesse**
**Patentanwälte Partnerschaft**
**Postfach 11 09 46**
**40509 Düsseldorf (DE)**

(56) Entgegenhaltungen:
| CH-A- 607 931 | DD-A- 268 401 |
| DE-A- 2 457 844 | DE-A- 3 116 610 |
| DE-A- 3 835 672 | US-A- 4 918 426 |

- **"Power loss due to pressure drop in an compressed air system", D.R. Foltz, Hankinson Corp.**
- **"Druckluftaufbereitung mit Mikrofilter und Adsorptionstrockner", Werner Straus-Zinker, Januar 1996, Seiten 144-146**

EP 0 808 206 B2

## Beschreibung

Die vorliegende Erfindung bezieht sich auf ein Verfahren zur kostenorientierten Überwachung und/oder Anzeige des Betriebszustandes einer austauschbaren oder regenerierbaren von einem Fluid durchflossenen Konditioniervorrichtung in einer Gesamtanlage, insbesondere eines Filters, wobei mittels mindestens eines Sensors kontinuierlich oder in Abständen mindestens ein Meßwert gemessen wird, aus dem sich der Verbrauchszustand der Konditioniervorrichtung ableiten läßt.

Anlagen dieser Art sind seit langem bekannt. So werden beispielsweise in [1] "H.G. Heitmann: Praxis der Kraftwerk-Chemie. Vulkan-Verlag, Essen (1986)" mehrere Anlagen der bekannten Art beschrieben: Dabei handelt es sich beispielsweise um Kerzenfilter (siehe [1], Seite 166 ff.) mit als Filterkerzen ausgebildeten Filterelementen zur mechanischen Reinigung von Flüssigkeiten, die z.B. mit Metallflies in unterschiedlicher Maschenweite oder mit Fäden aus Kunststoffen umwik-Kelt sein können. Es werden auch sogenannte Anschwemmfilter eingesetzt (siehe [1], Seite 148 ff.), bei denen das Filterelement mit einer Filterhilfsmittelschicht belegt wird. Filter dieser Art werden nach Erreichen eines bestimmten Druckverlustes durch Spülung mit sauberer Flüssigkeit in umgekehrter Richtung oder mit einem Regeneriermittel regeneriert.

Auch in [2] "Grundlagen für Industrielle Wassebehandlung. Drew Chemical Corporation, Boonton, New Jersey, USA (1980)" sind Anlagen der bekannten Art beschrieben: Dies sind z.B. mit Kies, Sand oder Anthrazit gefüllte Behälter (siehe [2], Seite 24 ff.), die von der zu reinigenden Flüssigkeit durchströmt und nach Erreichen eines bestimmten Druckabfalles mit Flüssigkeit oder Druckluft rückgespült werden.

In Druckluftanlagen werden ebenfalls Filter mit kerzenförmigen Filterelementen mit sehr feinen Poren eingesetzt, die nach Erreichen eines bestimmten Druckabfalles durch Austauschfilterelemente zu ersetzen sind.

Auch in der Kraftfahrzeugtechnik haben Filter die Aufgabe, die Motoren vor festen Verunreinigungen zu schützen. In [3] "P. Gerigk et al: Kraftfahrzeugtechnik Westermann-Verlag, Braunschweig (1994)" sind auf Seite 162 ff. Filter mit sehr unterschiedlichen Filterelementen für die Filterung von Luft, Kraftstoff und Öl beschrieben. Auch die Filterelemente dieser Filter werden nach Verbrauch durch neue ersetzt.

Weitere Konditioniervorrichtungen der bekannten Art beschreibt [1] auf Seite 149 ff.: Magneffilter, besonders Elektromagnetfilter reinigen Flüssigkeiten von ferromagnetischen Verunreinigungen. In diesem Fall bilden z.B. Metallkugeln das Filterelement, die in einem von einer Elektrospule umgebenen und von der zu reinigenden Flüssigkeit durchströmten Filterbehälter gehalten werden. Die Erschöpfung des Filters ist durch Differenzdruckmessung zu erkennen.

Bei anderen Konditioniervorrichtungen der bekannten Art handelt es sich beispielsweise um Entsalzungsanlagen, bei denen salzreiches Wasser mit Filtermembranen ausgerüstete Filterelemente durchläuft und nach dem Prinzip der Umkehrosmose (siehe [1], Seite 229 ff.) in salzarmes Permeat und salzreiches Konzentrat getrennt wird. Bei diesen Anlagen wird der Verbrauchszustand der Filterelemente durch eine Druckmessung kontrolliert und bei Erreichen eines bestimmten Druckes eine Regenerierung eingeleitet. Auch Ionenaustauscher kommen als Konditioniervorrichtungen für die Entsalzung zum Einsatz (siehe [1], Seite 135 ff.).

Konditioniervorrichtung für Fluide, auf die sich die Erfindung bezieht, meint allgemein alle Vorrichtungen und Anlagen, die Fluide konditionieren, also beispielsweise von mechanischen oder chemischen Verunreinigungen reinigen oder gelöste Inhaltsstoffe entfernen oder die Temperatur oder den Aggregatzustand des Fluids ändern. Die oben aufgeführten Beispiele beschreiben insofern nur unvollständig den weiten Bereich der Konditioniervorrichtungen, auf die sich die Erfindung bezieht. So kommen in Klimaanlagen Luftfilter zum Einsatz, Trinkwasser wird über Aktivkohlefilter von Geruchstoffen befreit Allen diesen beschriebenenen und allen weiteren bekannten Anlagen, auf die sich die Erfindung bezieht, ist gemeinsam, daß es Konditioniervorrichtungen für Fluide sind, diese Konditioniervorrichtungen einem Verbrauch unterliegen und spätestens nach völligem technischen Verbrauch regeneriert oder ausgetauscht werden müssen. Der Verbrauchszustand wird dadurch ermittelt, daß kontinuierlich oder in Abständen mindestens ein Meßwert gemessen wird, aus dem sich der Verbrauchszustand ableiten läßt.

Zur Regenerierung oder zum Austausch der Konditioniervorrichtungen sind diese in vielen Fällen teilweise oder vollständig außer Betrieb zu nehmen. Dazu wird von mehreren parallel angeordneten Konditioniervorrichtungen jeweils eine durch Schließen von Absperrarmaturen vom Fluidstrom isoliert, so daß der Betrieb der Gesamtanlage nicht unterbrochen werden muß.

Es sind auch Vorrichtungen bekannt, mit denen Teilbereiche der Konditioniervorrichtung, insbesondere mehrere in einem einzigen Gehäuse angeordnete Teilfilterelemente, nacheinander zuströmseitig oder zu- und abströmseitig vom Fluidstrom isoliert und dann einer, Regenerierung unterzogen werden können, ohne daß der Fluidstrom durch das Gehäuse unterbrochen werden muß. Eine derartige Vorrichtung ist beispielsweise in der deutschen Patentschrift DE 41 07 432 beschrieben.

Es sind auch Konditioniervorrichtungen bekannt, bei denen die Regenerierung zwar mit Aufwendungen und Kosten verbunden ist, jedoch ohne jede Betriebsunterbrechung durchgeführt werden kann.

Insgesamt entstehen für die Regenerierung oder den Austausch der Konditioniervorrichtungen Aufwendungen an Regeneriermittel und/oder Reinigungsenergie und/oder Personalaufwendungen und/oder Stillstandskosten und/oder Kosten für die Austauschelemente und die Entsorgung der verbrauchten Elemente. Daher wird üblicherweise die Regenerierung oder der Austausch auf einen Verbrauchszustand der Konditioniervorrichtung festgelegt, der nahe am völligem technischen Verbrauch liegt, bei dem gewisserma-βen eine technologische Grenze erreicht wird.

Natürlich gibt es auch vielfältige Konzepte, den Anlagenbetrieb unter Berücksichtigung der Kosten der Konditioniervorrichtungen zu optimieren. Dies erfolgt typischerweise bei der Auslegung von Anlagen durch Festlegung bestimmter Abhängigkeiten der anlagenspezifischen Parameter. Dies hat den Nachteil, daß einmal optimierte Konditionierstrategien nicht auf unterschiedlich anfallenden Konditionierbedarf, geänderte Kosten von Konditioniermitteln und/ oder schwankende Energiekosten reagieren. Bei Produktionseinrichtungen wird z. B. der Ausstoß an Produkt zum entscheidenden Arbeitskriterium genommen, wobei Produktionszeiten und Stillstandszeiten mit unterschiedlichen Kostenfaktoren gewichtet werden.

Nachteilig bei dieser Vorgehensweise ist, daß die Auswirkungen des Verbrauchzustandes der Konditioniervorrichtung auf die Betriebskosten der Gesamtanlage nur unzureichend berücksichtigt werden. Mit zunehmendem Verbrauch ändern sich technologische Eigenschaften der Konditioniervorrichtung in der Regel derart, daß bei der Gesamtanlage höhere Betriebskosten entstehen. Beispielsweise steigt der Druckverlust an einem mit konstantem Fluidmengenstrom durchflossenen Filter zur mechanischen Reinigung von Fluiden von Verunreinigungen bei konstantem Betrag des Fluidmengenstroms beträchtlich an, was eine erhöhte Pumpleistung zur Aufrechterhaltung des Fluidmengenstroms und damit höheren Energieverbrauch bewirkt. Die Leistungsfähigkeit von Konditioniervorrichtungen wird von deren Anbietern vorwiegend mit langer "Standzeit" begründet, wozu beispielsweise für Filterkerzen in Druckluftanlagen der die Notwendigkeit eines Austauschs signalisierende Grenzwert für den Druckverlust sehr hoch angegeben wird. Dieser beträgt beispielsweise für eine Filterkerze ca. 500 mbar, die im sauberem Zustand bei Nenndurchfluß einen Druckverlust von 35 mbar aufweist. Der Betreiber wartet bei diesem Beispiel mit dem Austausch der Filterkerze gegen eine neue mindestens so lange, bis der beschriebene Grenzwert für den Druckverlust erreicht ist. In vielen Fällen wird der Betreiber den Austausch sogar noch weiter hinauszögern, um möglichst geringe Aufwendungen für die Beschaffung neuer Filterkerten und den Austausch zu haben, ohne in sehr vielen Fällen den Anstieg der Betriebskosten der Gesamtanlage überhaupt zu bedenken. Unvorteilhaft ist auch, daß in vielen Fällen die Konditioniervorrichtungen zeitlich schwankenden Betriebsbedingungen unterliegen, z.B. einen zeitlich schwankenden Fluidmengenstrom aufweisen. Beispielsweise ändert sich bei demselben Verbrauchszustand der Druckverlust einer Filterkerze beträchtlich, was die übliche Verbrauchsanzeige über den Druckverlust in der Aussagefähigkeit sehr einschränkt.

Dieser Stand der Technik ist nicht nur für den einzelnen Betreiber unvorteilhaft, da die erhöhten Betriebskosten der Gesamtanlage beträchtlich höher sein können als die Aufwendungen für Regenerierung oder Austausch der Konditioniervorrichtung. Auch volkswirtschaftlich und hinsichtlich des Umweltschutzes ist der beschriebene Stand der Technik nachteilig, da Kosten und Umweltschädigung durch vermeidbaren Energieverbrauch ständig zunehmen. Bedeutsam in diesem Sinne ist auch, daß bei dem einzelnen Betreiber in den meisten Fällen das für die Bewertung der Betriebskosten der Gesamtanlage notwendige technische und betriebswirtschaftliche Fachwissen nicht vorausgesetzt werden kann.

Es sind zwar auch Verfahren und Vorrichtungen bekannt, welche die Druckdifferenzanzeige auf einen bestimmten Wert des Fluidmengenstroms beziehen und damit von den Zufälligkeiten der Druckdifferenzmessung befreien (DE 42 24 721 A1), oder sogar eine Aussage über die zu erwartende Restlebensdauer bis zum technologischen Verbrauch ermöglichen (EP 0 527 136 A1). Dies alles überwindet jedoch nicht die oben beschriebenen Nachteile des Standes der Technik.

Auch durch die DE 31 16 610 werden die Nachteile des Standes der Technik nicht überwunden. Diese Offenlegungsschrift offenbart ein Verfahren zur Steuerung eines Filters, bei dem die Steuerung nach charakterisierenden Kriterien erfolgt. Dazu wird eine Effektivität eines Filtrationsvorganges definiert, die von einer maximalen Filterleistung sowie von sogenannten Selbstkosten des Filterbetriebes während einer Reihe von Betriebszyklen des Filters abhängen. In einem Betriebszyklus ist zum einen die Betriebszeit, aber auch die Austauschzeit eines Filters enthalten. Die in dieser Schrift mit P definierte Triebkraft eines Filtrationsvorganges wird nun in Abhängigkeit von der maximalen Effektivität des Filtrationsvorganges und eines Druckverlustes über den Filter eingestellt Sogenannte Hilfsarbeitsgänge sowie Unterbrechungen des Filterbetriebes werden dabei in Abhängigkeit von der Filtrationszeit bzw. der Anzahl von Filtrationszyklen festgelegt. Eine optimale Steuerung eines Filters soll sich ergeben, wenn zuerst das Effektivitätskriterium eines Filtrationsvorganges berechnet wird, woran sich die Bestimmung eines Extremwertes des Effektivitätskriteriums nach der Zeit, der Triebkraft und der Filtrationszykluszahl anschließt. Entsprechend den dabei gefundenen Werten soll das Abstellen des Filters zur Durchführung von Hilfsarbeitsgängen, eine Vorgabe für einen Anfangswert der Triebkraft des Filtrationsvorganges und die Unterbrechung einer Filtration zum Austausch oder zur ‚vollständigen Regenerierung des Filters vorgenommen werden. Um die in der Formel des Effektivitätskriteriums auftretenden Zeiten, die Dauer des Filtrationsarbeitsganges, die Dauer der Hilfsarbeitsgänge sowie die Dauer der vollständigen Regenerierung oder des Austausches des Filters untereinander bewerten zu können, weisen diese kostenmäßige Zeitmaßstäbe auf. Diese weisen den einzelnen Zeiten jeweils eine Gewichtung zu, wobei diese Gewichtungen im Falle einer Realisierung der Filtersteuerung nach dem Leistungsmaximum jeweils den Wert 1 annehmen. Ausgehend von diesem Verfahren zur Steuerung eines Filters, bei dem die Zeit kostenmäßig gewichtet wird, ist es nun Aufgabe der vorliegenden Erfindung, ein Verfahren zur kostenorientierten Überwachung und/oder Anzeige des Betriebszustandes einer austauschbaren oder regenerierbaren von einem Fluid durchflossenen Konditioniervorrichtung zu schaffen, wobei selbst bei einem Leistungsmaximum Kosten noch berücksichtigt werden. Insbesondere soll der notwendige Austausch oder die notwendige Regenerierung der Konditioniervorrichtung nicht dann angezeigt werden, wenn diese technologisch verbraucht ist oder die Maximierung der Filterleistung dies erfordern wurde, sondern dann, wenn dies kostenorientiert sinnvoll ist Auch die Schaffung einer entsprechenden Vorrichtung ist Aufgabe der Erfindung. Zur Lösung dieser Aufgabe dienen ein Verfahren nach Anspruch 1 und eine Vorrichtung nach Anspruch 20. Vorteilhafte Ausgestaltungen sind in den jeweils abhängigen Ansprüchen angegeben.

Ein wesentliches Merkmal der Erfindung ist, daß die Auswirkungen des Verbrauchszustandes der Konditioniervorrichtung auf die Betriebskosten der Gesamtanlage in die Überlegungen zum Austausch oder zur Regenerierung der Konditioniervorrichtung einbezogen und gegen die Kosten des Austauschs oder der Regenerierung selbst abgewogen werden, so daß insgesamt ein Kostenminimum erreicht wird.

Erfindungsgemäß wird mindestens ein Meßwert, aus dem sich der Verbrauchszustand der Konditioniervorrichtung ableiten läßt, einer Auswerteelektronik zugeführt und aus dem Meßwert der aktuelle Verbrauchszustand ermittelt Bei diesen Meßwerten kann es sich um einen Differenzdruck, um die Durchflußmenge des Fluids, um die Konzentration eines im Fluid gelösten Bestandteils, um eine Differenz zwischen zwei Konzentrationen, um eine Drehzahl, um eine Temperatur oder andere Meßwerte handeln. Anhand in der Auswerteelektronik gespeicherter Daten und/oder funktionaler Abhängigkeiten werden die Auswirkungen des Verbrauchszustandes der Konditioniervorrichtung auf die Betriebskosten der Gesamtanlage zumindest näherungsweise bestimmt, die Kosten für ein Austauschen oder Regenerieren der Konditioniervorrichtung ermittelt und mit den Auswirkungen des Verbrauchszustandes auf die Betriebskosten der Gesamtanlage verglichen. Über eine Ausgabeeinheit erfolgt ein Signal oder eine Anzeige an einem Anzeigeinstrument für den Zeitpunkt, ab dem der Austausch oder die Regenerierung kostensparender ist als der Weiterbetrieb hin zum vollständigen technischen Verbrauch der Konditioniervorrichtung. Es ist ein wesentliches Ergebnis der Erfindung, daß sich bei erfindungsgemäßer kostenorientierter Überwachung der Konditioniervorrichtungen unter Beachtung der Auswirkungen des Verbrauchszustandes der Konditioniervorrichtungen auf die Betriebskosten der Gesamtanlage überraschenderweise in der Regel eine deutlich kürzere "wirtschaftliche Lebensdauer" ergibt, als sie als "technische Lebensdauer" selbst von Fachingenieuren angegeben und vom Betreiber der Konditioniervorrichtungen in der Regel auch beachtet wird.

Eine besondere Ausführungsform der Erfindung, die beispielhaft näher beschrieben wird, betrifft ein Filterelement zur Reinigung von Fluiden, bei dem sich der Strömungswiderstand mit zunehmendem Verbrauch erhöht. Der erhöhte Strömungswiderstand wiederum verursacht zu seiner Überwindung höhere Betriebskosten in der Gesamtanlage, in der das Filterelement eingesetzt ist, z.B. durch erhöhte Kompressorleistung in einer Druckluftversorgungsanlage.

Bevorzugt werden der Druckverlust über die Konditioniervorrichtung und die Durchflußmenge des Fluidstromes gemessen, der die Konditioniervorrichtung durchströmt. Bei vielen Anlagen ist allerdings der Durchfluß näherungsweise konstant oder die ermittelten Ergebnisse hängen kaum vom Durchfluß ab, so daß näherungsweise die Berechnungen auch mit einem als etwa konstant angesehenen Durchfluß nur mittels des gemessenen Druckverlustes durchgeführt werden können.

Auch soll in einer weiteren bevorzugten Ausführungsform zusätzlich weiterhin der technische Verbrauch der Konditioniervorrichtung überwacht und angezeigt werden. Zusätzlich kann auch eine Vorhersage über den ungefähren Zeitabstand bis zum technischen Verbrauch gemacht werden.

Bevorzugt soll die Ermittlung der Meßwerte in vorgebbaren Zeitintervallen erfolgen, die wiederum insbesondere 1 Minute bis 24 Stunden betragen sollen, natürlich abhängig von der Zeitspanne in der sich der Betriebszustand signifikant ändern kann. Die Messung in größeren Zeitintervallen hat besonders dann Vorteile, wenn die Energieversorgung der später beschriebenen Vorrichtung zur Durchführung des Verfahrens mittels Batterie erfolgt, und durch Messen in größeren Zeitintervallen die Lebensdauer der Batterie verlängert werden kann. Die Zeitintervalle müssen jedoch so kurz sein, daß eine aussagekräftige Bewertung des Verbrauchszustandes der Kondditioniervorrichtung möglich ist.

Überraschenderweise sind die Kosteneinsparungen bei Anwendung des erfindungsgemäßen Verfahrens gegenüber dem Stand der Technik ganz beträchtlich. So ergeben sich beispielsweise für eine Druclduftfilterkerze, die ganzjährig mit einem Druclduftstrom von etwa 2.900 Nm$^3$/h bei 7 bar Absolutdruck durchströmt wird und bei technischem Verbrauch nach einer Betriebszeit von 1 Jahr bei einem Differenzdruck von 500 mbar gegen eine neue Filterkerze (Neuzustand 35 mbar; Austauschkosten DM 900) ausgetauscht wird, ein Energiemehrverbrauch des Luftkompressors von ca. 20.000 kWh im Jahr durch den mit der Verschmutzung der Filterkerze verbundenen Druckdifferenzanstieg, wenn man den Wirkungsgrad des Luftkompressors mit 65 % annimmt. Bei einem Preis für die elektrische Energie von DM 0.15 je kWh ergeben sich Kosten für den Energiemehrverbrauch von ca. DM 3.000 im Jahr und Gesamtkosten von ca. DM 3.900 einschließlich der Austauschkosten für die Filterkerze. Bei Anwendung des erfindungsgemäßen Verfahrens zur kostenorientierten Überwachung des Betriebszustandes würde ein Signal nach einer Betriebszeit der Filterkerze von etwa 7,5 Monaten erfolgen, das den Austausch der Filterkerze bei diesem Verbrauchszustand empfiehlt. Zu diesem Zeitpunkt hätte die Filterkerze bei gleichbleibendem Druckluftstrom einen Energiemehrverbrauch am. Kompressor von nur ca. 6.200 kWh in 7,5 Monaten. Auf das Jahr umgerechnet ergibt sich ein Energiemehrverbrauch von ca. 9.900 kWh oder ca. DM 1.500 und insgesamt ca. DM 2.900 einschließlich der anteiligen Austauschkosten für die Filterkerze. Die Anwendung des erfindungsgemäßen Verfahrens ergibt insgesamt eine Energieeinsparung von 10.100 kWh - dies sind 50% des gesamten Energiemehrverbrauchs oder eine Kosteneinsparung von etwa DM 1.000 im Jahr, wobei die erhöhten Austauschkosten berücksichtigt sind. Dies zeigt, daß sowohl die umweltschützenden als auch die betriebswirtschaftlichen Effekte der Erfindung ganz beträchtlich sind.

Bei Produktionsanlagen können bei den Kosten für Energiemehrverbrauch auch fiktive Kosten für Minderproduktion bzw. verringerte Wertschöpfung aufgrund des Zustandes der Konditioniervorrichtung enthalten sein, wodurch erfindungsgemäß auch der Produktpreis bei der Steuerung berücksichtigt wird.

Eine bevorzugte Form des erfindungsgemäßen Verfahrens verläuft wie folgt: Meßwerte sind der Differenzdruck des Filterelementes und der Fluidmengenstrom durch das Filterelement (wenn nicht etwa konstant). Im wesentlichen aus den ab Inbetriebsetzung des regenerierten oder ausgetauschten Filterelementes bis zum Zeitpunkt der Messung aufsummierten Betriebsmehrkosten der Gesamtanlage durch den erhöhten Differenzdruck des Filterelementes und den Kosten für Regenerierung oder Austausch des Filterelementes wird die Kostensumme gebildet. Aus der Kostensumme werden die mittleren Betriebskosten pro Zeiteinheit berechnet unter der Annahme, daß das Filterelement zum derzeitigen Zeitpunkt regeneriert oder ausgetauscht würde. Sobald die mittleren Betriebskosten pro Zeiteinheit über dem Zeitablauf betrachtet den niedrigsten Wert erreicht haben, wird über eine Warnanzeige das Regenerieren oder der Austausch des Filterelementes empfohlen. Diese bevorzugte Ausbildung des Verfahrens zur kostenorientierten Überwachung des Betriebszustandes betrachtet das Betriebsspektrum für die Filterkerze nach Druckverlust und Fluidmengenstrom für den gesamten vergangenen Zeitraum ab Regenerierung oder Austausch und nimmt für die zukünftige Entwicklung, das heißt für den nächsten Betriebszyldus, ein ähnliches Betriebspektrum an. Ein besonders bevorzugtes Verfahren enthält die folgenden Schritte:

a. Berechnung und Speicherung eines Leistungsverlustes ($\Delta$N), welchen die Verschmutzung des Filterelementes wegen des damit verbundenen erhöhten Differenzdruckes (DP) verursacht, als Funktion ($\Delta$N = f (DP)) des Differenzdruckes (DP) in einem Funktionsspeicher der Auswerteelektronik;

b. Ermittlung des augenblicklichen Differenzdrukkes (DPa) in vorgegebenen Zeitintervallen ($\Delta$Ta) aus den Meßwerten (Sdp);

c. Ermittlung des augenblicklichen Leistungsverlustes ($\Delta$N(n)) anhand der im Funktionsspeicher gespeicherten Funktion ($\Delta$N = f (DP));

d. Ermittlung des augenblicklichen Energieverlustes ($\Delta$Ea), welchen der ermittelte Leistungsverlust ($\Delta$N) im letzten Zeitintervall ($\Delta$Ta) verursacht hat, insbesondere nach der Formel

$$\Delta Ea = \Delta Ta \,^* (\Delta N(n) + \Delta N(n\text{-}1)) / 2,$$

wobei der augenblickliche Leistungsverlust $\Delta$N(n-1) zu Beginn und der augenblickliche Leistungsverlust $\Delta$N(n) am Ende des letzten Zeitintervall ($\Delta$Ta) gilt; e. Bildung einer Energiesumme ($\Delta$E) vorzugsweise aller augenblicklichen Energieverluste ($\Delta$Ea), die in allen zu einem Gesamtzeitintervall ($\Delta$T1) aufsummierten Zeitintervallen ($\Delta$Ta) seit dem Beginn des Betriebes des Filters mit einem sauberen Filterelement entstanden sind;

f. Bildung einer Kostensumme ($\Sigma$K), vorzugsweise nach der Formel $\Sigma$K = $\Delta$E * X + Kk+ Ks , die insgesamt bei einem Austausch oder einer Regeneration des Filterelementes zum derzeitigen Zeitpunkt (T1) entstehen würden, wobei X die Kosten der Energieeinheit angibt, Kk die Kosten des neuen Filterelementes oder die Kosten der Regeneration des Filterelementes und Ks sonstige mit dem Betrieb des Filters und Regeneration oder Austausch und Entsorgung des verschmutzen Filterelementes verbundenen Kosten;

g. Berechnung von vorzugsweise mittleren Betriebskosten pro Zeiteinheit (Kbm) für das Gesamtzeitintervall ($\Delta$T1), insbesondere nach der Formel Kbm = $\Sigma$K / $\Delta$T1;

h. Berechnung der augenblicklichen Ableitung nach der Zeit (t) der mittleren Betriebskosten pro Zeiteinheit, insbesondere nach der Formel A(n) = (Kbm(n) - Kbm(n-1)) / $\Delta$Ta, und Speicherung dieses Wertes der augenblicklichen Steigung (A(n)) in einem Betriebswertspeicher;

i. Auslösung einer Warnanzeige auf einem Anzeigeinstrument, wenn die augenblickliche Steigung (A(n)) einen Wert gleich oder größer als Null annimmt.

In weiteren Ausbildungsformen des erfindungsgemäßen Verfahrens wird durch Extrapolation des Verlaufs der mittleren Betriebskosten pro Zeiteinheit über der Zeit die Restlebensdauer des Filterelementes bis zum empfohlenen Austausch oder Regenerierung berechnet und zur Anzeige gebracht. Dies ermöglicht dem Betreiber eine vorausschauende Planung der Wartungsarbeiten.

Das erfindungsgemäße Verfahren ist gleicherma-βen anwendbar für Konditioniervorrichtungen, bei denen das verbrauchte Filterelement durch Austausch erneuert wird, wie für solche, bei denen das Fikereiement regeneriert wird, vorzugsweise durch Rückspülen mit sauberem Fluid oder durch ein Regeneriermittel.

Für regenerierbare Konditioniervorrichtungen wird in einer bevorzugten Ausbildung der Erfindung aus der Vielzahl der nach erfolgter Regenerierung des Filterelementes für den jeweils abgeschlossenen Betriebzyklus und den Beginn des jeweils neuen gespeicherten kennzeichnenden Betriebsdaten die Auswirkung der Regenerierungen auf die Betriebskosten der Gesamtanlage zumindest näherungsweise bestimmt und mit den Kosten eines Austauschs der Konditioniervorrichtung verglichen. Dies ist dann besonders vorteilhaft, wenn die Regenerierung die Konditioniervorrichtung nicht in einen "Neuzustand" zurückversetzten kann, sich also trotz Regenerierung ein schleichender Verbrauch der Konditioniervorrichtung einstellt, der mit der Zeit zu steigenden Betriebskosten führt. Nach Vergleich der über mehrere aufeinander folgende Betriebszyklen ansteigendenden Betriebskosten der Gesamtanlage mit den Kosten eines Austauschs der Konditioniervorrichtung erfolgt eine an einem der Konditioniervorrichtung zugeordneten Anzeigeinstrument eine Anzeige ab dem Zeitpunkt, ab dem der Austausch insgesamt kostensparender ist als die Regenerierung. Diese Vorgehensweise ist praktisch eine doppelte, überlagerte Anwendung des erfindungsgemäßen Konzeptes. In einer ersten Stufe wird kostenorientiert entschieden, wann jeweils eine Regenerierung stattfindet. Dem überlagert wird eine Überwachung, wann die Vorrichtung ausgetauscht werden sollte. In der zweiten Stufe gehen sämtliche Betriebskosten der ersten Stufe und die Kosten der jeweils durchgeführten Regenerierungen in die Betrachtung ein und werden mit den Kosten bei Austausch der Vorrichtung verglichen. Beide Stufen arbeiten prinzipiell unabhängig voneinander, jedoch werden in der zweiten Stufe alle Kosten aus der ersten Stufe weiterverarbeitet.

Wie anhand der Zeichnungen noch näher erläutert wird, dient zur Lösung der gestellten Aufgabe auch eine Vorrichtung gemäß den Ansprüchen 20, 21 oder 22 mit Weiterbildungen und Ausführungen gemäß den davon jeweils abhängigen Ansprüchen.

Ausführungsbeispiele der Erfindung und deren Umfeld werden anhand schematischer Zeichnungen näher erläutert, und zwar zeigen:

Fig. 1       eine als Filter ausgebildete Konditioniervorrichtung nach dem Stand der Technik,
Fig. 2       eine als Filter ausgebildete erfindungsgemäße Konditioniervorrichtung mit austauschbarem Filterelement,
Fig. 3       ein Ausführungsbeispiel für die Durchführung des Verfahrens,
Fig.4        eine andere Ausführungsform einer erfindungsgemäßen Konditioniervorrichtung mit einem regenerierbaren Filterelement,
Fig. 5       eine weitere Ausführungsform einer erfindungsgemäßen Konditioniervorrichtung mit besonderer Messung der Meßwerte DP und V, und
Fig. 6 bis 8 verschiedene Ausführungsformen von Aufsätzen für Konditioniervorrichtungen, insbesondere Fiftervorrichtungen, mit denen Differenzdruckmessungen und/oder deren erfindungsgemäße Auswertungen und/
             oder Eingaben und Anzeigen erfolgen können. Solche Aufsätze oder Teile davon können auch unabhängig
             von der oben beschriebenen Filtersteuerung vorteilhaft eingesetzt werden.

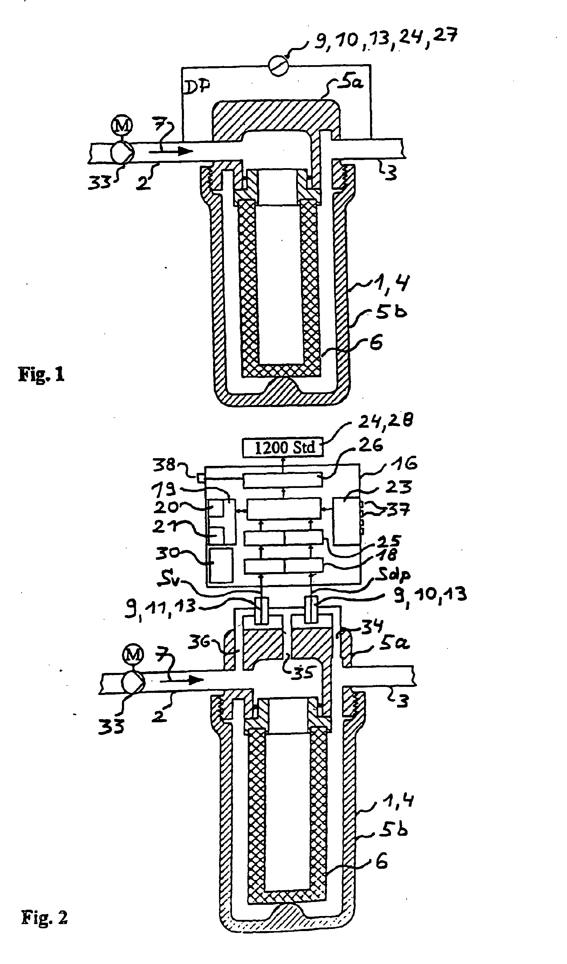

Fig. 1 zeigt schematisch und beispielhaft eine Konditioniervorrichtung (1), wie sie nach dem Stand der Technik aufgebaut ist und betrieben wird. Das Filter (4) besteht aus einem Filtergehäuse (5a: 5b) und einem Filterelement (6). Das Filtergehäuse (5a; 5b) ist mit einer Zuströmleitung (2) und einer Abströmleitung (3) verbunden, durch die das durch Pfeil gekennzeichnete Fluid (7) strömt. Der Fluidstrom wird angetrieben durch eine Pumpe (33) mit Motor. Der den Verbrauchszustand des Filterlementes (6) ermittelnde Sensor (9) ist ein Drucksensor (10), der als Differenzdruck-Meßsystem (13) ausgebildet ist und als Anzeigeinstrument (24) ein Drehzeigerinstrument (27) besitzt. Gemessen wird als Meßwert Sdp der Differenzdruck (DP) über das Filterelement (6). Nicht dargestellt ist, daß das Anzeigeinstrument (24) über die Zeigerstellung den Verbrauchszustand des als Filterkerze ausgebildeten Filterelementes (6) anzeigt. Beispielsweise zeigt die Zeigerstellung des Drehzeigerinstrumentes (27) in einen nicht dargestellten roten Skalenbereich, sobald der Meßwert (DP) einen vorgegebenen Wert erreicht, und das Filterelement (6) technisch verbraucht ist und ausgetauscht werden soll. Zum Austausch des Filterlementes (6) muß im dargestellten Ausführungsbeispiel das Filter (4) durch nicht dargestellte Absperrorgane vom weiteren Verlauf der Zuströmleitung (2) isoliert oder die Pumpe (33) muß abgeschaltet werden, um das Filtergehäuse (5b) öffnen zu können. Dieser als Beispiel dargestellte und beschriebene Stand der Technik ist nachteilig, da die Überwachung und Anzeige des Betriebszustandes der Konditioniervorrichtung (1) nicht kostenorientiert ist und lediglich der technische Verbrauch des Filterelementes (6) vom Anzeigeinstrument (24) als ganz grober Richtwert entnommen werden kann, zumal keine Überwachung des Volumenstromes (V) des Fluids (7) erfolgt. Insbesondere werden die durch den Anstieg des Differenzdruckes (DP) am Filterelement bedingten Betriebskosten der Gesamtanlage, in diesem Beispiel ein erhöhter Leistungsbedarf der Pumpe (33), nicht berücksichtigt Eine erhöhte Antriebsleistung der Pumpe (33) ist notwendig, um bei erhöhtem Differenzdruck des Filterelementes (6) einem nicht dargestellten, der Abströmleitung (3) nachgeschalteten Verbraucher Fluid (7) mit dem erforderlichen Druck zu liefern. Mit Vorrichtungen dieser Art und des beschriebenen Verfahrens zu ihrem Betrieb enstehen unvertretbar hohe Energieverluste und vermeidbare Kosten.

Fig. 2 zeigt schematisch eine lediglich beispielhaft als Filter (4) ausgeführte erfindungsgemäße Konditiervorrichtung (1). Das Filter (4) besteht aus einem Filtergehäuse (5a; 5b) und einem Filterelement (6). Das Filtergehäuse (5a; 5b) ist mit einer Zuströmleitung (2) und einer Abströmleitung (3) verbunden, durch die das durch Pfeil gekennzeichnete Fluid (7) strömt. Der Fluidstrom wird angetrieben durch eine Pumpe (33) mit Motor. Zur Überwachung und Anzeige des Betriebszustandes werden als Meßwerte (Sdp; Sv) der Differenzdruck (DP) und der Fluidmengenstrom (V) gemessen. Zur Messung des Differenzdruckes (DP) ist das Filtergehäuse (5a) mit einer ersten Bohrung (34) und einer zweiten Bohrung (35) ausgestattet, an die jeweils eine Seite eines Differenzdruck-Meßsystems (13) als Drucksensor (10) ausgeführter Sensor (9) angeschlossen ist. Zur Messung des Fluidmengenstroms (V) ist das Filtergehäuse (5a) zusätzlich mit einer dritten Bohrung (36) ausgestattet. An die zweite Bohrung (35) und die dritte Bohrung (36) ist jeweils mit einer Seite eines Differenzdruck-Meßsystems (13) ein als Durchflußsensor (11) ausgeführter Sensor (9) angeschlossen. Der Durchflußsensor (11) mißt in dieser lediglich schematisch und nur als Beispiel dargestellten Ausführungsform der Erfindung den dynamischen Druck des strömenden Fluids (7), aus dem mittels Kalibrierung der Betrag des Fluidmengenstroms (V) ermittelbar ist. Die beiden Differenzdruck-Meßsysteme (13) sind ebenfalls nur schematisch dargestellt und bestehen beispielsweise in bekannter Weise aus nicht näher bezeichnetem Gehäuse und Meßmembran. Die Meßwerte (V; DP) werden erfindungsgemäß einer Auswerteelektronik (16) zugeführt, die Meßwerteingang (18), einen Wandler (25), eine Eingabeeinheit (23), insbesondere als Funktionsspeicher (20) und Betriebswertspeicher (21) ausgeführte nicht flüchtige Speicher (19) und eine Ausgabeeinheit (26) enthält. Die Ausgabeeinheit (26) ist in diesem Ausführungsbeispiel mit einem als digitales Display (28) ausgeführten Anzeigeinstrument (24) verbunden, auf dem beispielsweise ein als Restlebensdauer (Srld) berechnetes Betriebsreservesignal (Sbr) angezeigt wird, das in der Abbildung mit dem Wert "1200 Std" dargestellt ist. Diese Anzeige bedeutet in diesem Beispiel, daß das Filterelement (6) bis zum kostenorientiert empfohlenen Austausch noch eine Betriebszeit von etwa 1200 Stunden erwarten läßt, unter der Annahme, daß das Betriebsspektrum für das Filter (4) nach Druckverlust (DP) und Fluidmengenstrom (V) für die Zukunft in etwa dem Betriebsspektrum der Vergangenheit seit dem letzten Austausch des Filterelementes (6) entspricht. Im Rahmen der Erfindung könnten am Anzeigeinstrument (24) auch andere Signale oder Anzeigen erfolgen, wie z.B. zusätzlich die verbleibende Betriebszeit bis zum völligen technischen Verbrauch. Die Ausgabeeinheit (26) könnte auch im ständigen Wechsel unterschiedliche Anzeigen auf dem Anzeigeinstrument (24) zur Anzeige bringen oder als Warnanzeige über einen zusätzlichen Signalausgang (38) zur Verfügung stellen, an den kundenseitig beliebige Meldesysteme anschließbar sind. In dem dargestellten Ausführungsbeispiel ist die Eingabeeinheit (23) mit Tasten (37) ausgerüstet, über die beispielsweise die Kostengrößen (X; Kk; Ks) zur Brechnung der mittleren Betriebskosten pro Zeiteinheit (Kbm) manuell eingegeben werden. Im dargestellten Beispiel wird die Auswerteelektronik (16) von einer Batterie (30) versorgt.

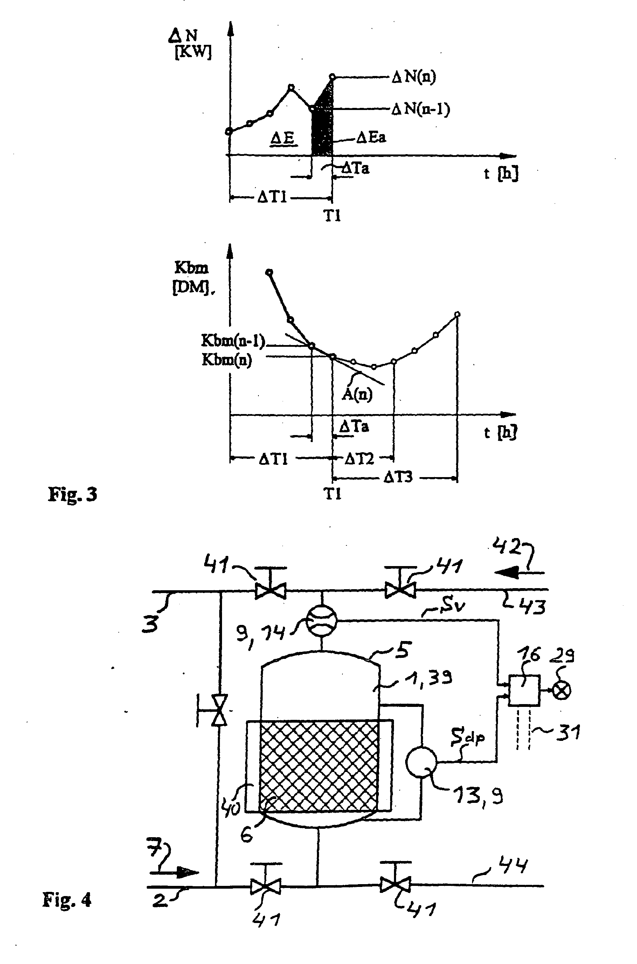

In Fig.3 ist mit einem Ausführungsbeispiel die Durchführung des erfindungsgemäßen Verfahrens in wichtigen Schritten dargestellt. Die obere Grafik in Fig. 3 zeigt zunächst den Verlauf des Leistungsverlustes (ΔN) über der Zeit (t). Am Ende des letzten Zeitintervalls (ΔTa) wurde mit Hilfe nicht dargestellter Meßwerte (Sdp; Sv)) und anhand der im nicht dargestellten Funktionsspeicher gespeicherten Daten und funktionalen Abhängigkeiten der augenblickliche Leistungsverlust (ΔN(n)) und zu Beginn des letzten Zeitintervalls (ΔTa) der zu diesem Zeitpunkt güftige augenblickliche Leistungsverlust (ΔN(n-1)) ermittelt. Die Fläche unter der Kurve des Leistungsverlust (ΔN) mit dem Zeitintervall (ΔTa) als Breite stellt den augenblicklichen Energieverlust (ΔEa) dar, berechnet nach der Formel

$$\Delta Ea = \Delta Ta * (\Delta N(n) + \Delta N(n\text{-}1)) / 2.$$

Nicht dargestellt ist die Berechnung der Summe (ΔE) aller augenblicldichen Energieverluste (ΔEa), die in allen zum Gesamtzeitintervall (ΔT1) aufsummierten Zeitintervallen (ΔTa) seit dem Beginn des Betriebes des Filters mit einem regenerierten oder ausgetauschten Filterelement entstanden sind. Die untere Grafik von Fig. 3 zeigt den Verlauf der mittleren Betriebskosten pro Zeiteinheit (Kbm) Ober der Zeit (t). Zu erkennen ist die augenblickliche Steigung (A(n)) im Zeitintervall (ΔTa). In nicht dargestellter Weise wurde mit dem erfindungsgemäßen Verfahren der weitere Verlauf der mittleren Betriebskosten pro Zeiteinheit (Kbm) über der Zeit (t) berechnet und in der Grafik schematisch dargestellt. Danach wird durch Extrapolation des bisherigen Verlaufs der mittleren Betriebskosten pro Zeiteinheit (Kbm) eine Restlebensdauer (ΔT2) bis zum empfohlenen Austausch oder bis zur empfohlenen Regenerierung des Filteretementes und eine Maximallebensdauer (ΔT3) bis zum völligen technischen Verbrauch der Konditioniervorrichtung vorausgesagt. Deutlich ist zu erkennen, daß im letzten nicht bezeichneten Zeitintervall (ΔTa) vor Erreichen der Restlebensdauer (ΔT2) der Verlauf der mittleren Betriebskosten pro Zeiteinheit (Kbm) über der Zeit (t) einen tiefsten Punkt durchlaufen hat und wieder ansteigt. Bis dahin werden also die niedrigst möglichen mittleren Betriebskosten pro Zeiteinheit (Kbm) erreicht und ein Austausch oder Regenerieren der Konditioniereinrichtung (1) ist kostenorientiert optimal. Da der Kurvenverlauf der mittleren Betriebskosten pro Zeiteinheit (Kbm) in der Nähe des Minimums eher flach verläuft, steht ein ausreichend langer Zeiraum für die Einplanung des Austauschs oder der Regenerierung zur Verfügung. Es wird aus dem Bild erkennbar, daß das erfindungsgemäße Verfahren den Verlauf des durch den Verbrauch der Konditioniervorrichtung (1) verursachten Leistungsverlust ($\Delta$N) seit dem letzten Austausch oder Regenerieren bis zum derzeitigen Zeitpunkt, also in der Vergangenheit bewertet und daraus auf die Zukunft schließt. Dies geschieht unter der Annahme, daß der mit dem Austausch oder dem Regenerieren abgeschlossene Betriebszyklus sich im Verbrauchsverlauf und Verlauf des Fluidmengenstromes über der Zeit ähnlich verhäft wie der nächste Betriebszyklus nach abgeschlossenem Austausch oder Regenerieren. Dies ist die bestmögliche Annäherung an die Wirklichkeit und eine wesentliche Ausführungsform der Erfindung. Wichtig ist auch, daß das gesamte Spektrum der schwankenden Betriebsbedingungen durch den erfindungsgemäßen Integrationsvorgang mit anschlie-βender Differenzierung bewertend in die Überprüfung einbezogen wird, was bei der nach dem bekannten Stand der Technik üblichen Überwachung eines bloßen Augenblickswertes des Verbrauchs nicht möglich ist Bei sinkendem Fluidmengenstrom sinkt der durch den Verbrauch der Konditioniervorrichtung (1) verursachte Leistungsverlust ($\Delta$N) zwar ab, was im dargestellten Beispiel sichtbar wird, geht jedoch in die Bewertung ein.

Fig. 4 zeigt schematisch eine andere Ausführungsform der Erfindung. Die Konditioniervorrichtung (1) ist als Elektromagnetfilter (39) ausgeführt. Das Elektromagnetfilter (39) besteht aus einem Filtergehäuse (5) und einem Filterelement (6), das beispielsweise aus, durch eine Schraffur dargestellten, aufeinandergeschichteten Weicheisenkugeln oder Stahlwolle aufgebaut sein kann. Das Filtergehäuse (5) ist von einer stromdurchflossenen Kupferspule (40) umgeben und mit einer Zuströmleitung (2) und einer Abströmleitung (3) verbunden, durch die das durch Pfeil gekennzeichnete Fluid (7) strömt. Der Fluidstrom wird angetrieben durch eine nicht dargestellte Pumpe. Als Meßwerte werden der Differenzdruck (DP) und der Fluidmengenstrom (V) gemessen. Für die Messung des Differenzdruckes (D P) kommt ein Differenzdruck-Meßsystem (13) zum Einsatz, für die Messung des Fluidmengenstrom (V) ein Volumenstrom-Meßsystem (14). Weiterhin ist eine Auswerteelektronik (16) zu sehen, die eine Signalleuchte (29) ansteuert, wenn erfindungsgemäß die augenblickliche Steigung (A(n)) der mittleren Betriebskosten pro Zeiteinheit (Kbm) einen Wert gleich oder größer als Null annimmt Die Auswerteelektronik (16) und die Sensoren (9) werden über das Stromnetz (31) versorgt. Zum Regenerieren wird das Elektromagnetfilter (39) mittels Absperrarmaturen (41) von der Zuströmleitung (2) und der Abströmleitung (3) isoliert und nach Öffnen anderer Absperrarmaturen (41) mit der Spülleitung (43) und der Entsorgungsleitung (44) verbunden, so daß das als Pfeil dargestellte Regeneriermittel (42) fließen kann. Zum Regenerieren wird die nicht dargestellte Stromversorgung der Kupferspule (40) abgeschaltet. In bestimmten Anwendungsfällen ist der Regenerierungsprozeß nicht in der Lage, die Filterelemente vollständig zu reinigen, so daß sich eine bleibende Verschmutzung mit über die Betriebszeit steigender Tendenz einstellt. Erfindungsgemäß wird von der Auswerteelektronik aus den für jeden Betriebszyklus gespeicherten Betriebsdaten das Langzeitverhalten des Filters ermittelt und an einem nicht dargestellten zusätzlichen Anzeigeinstrument signalisiert, wenn der Austausch des Filterlementes (6) oder dessen Grundreinigung kostengünstiger ist als der Weiterbetrieb mit normaler Regenerierung. Diese Überprüfung bewertet den auf einen einheitlichen Fluidvolumenstrom (V) bezogenen Druckverlust (DP) des Filters unmittelbar nach der Regenerierung gemessen im Vergleich zu den entsprechenden Werten nach einem Austausch sowie die zeitliche Änderung der für jeden Betriebszyklus gespeicherten Energiesummen ($\Delta$E) und Betriebszeiten ($\Delta$T1) bis zur jeweiligen Regenerierung.

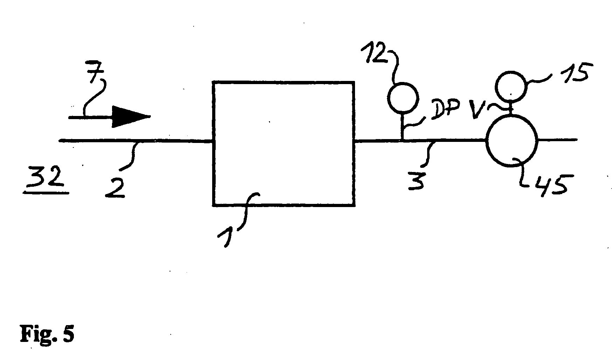

Fig. 5 zeigt eine Konditioniervorrichtung (1) mit Zuströmleitung (2) und Abströmleitung (3). Der Meßwert für DP wird mittels Druckaufnehmer (12) gemessen, der stromabwärts der Konditioniervorrichtung (1) an die Abströmleitung (3) angeschlossen ist. Zur Messung des Meßwertes V dient ein Drehzahlgeber (15), der die Drehzahl der nachgeschalteten Arbeitsmaschine (45) mißt. Das Fluid (7) strömt der Konditioniervorrichtung (1) aus der Umgebung (32) zu.

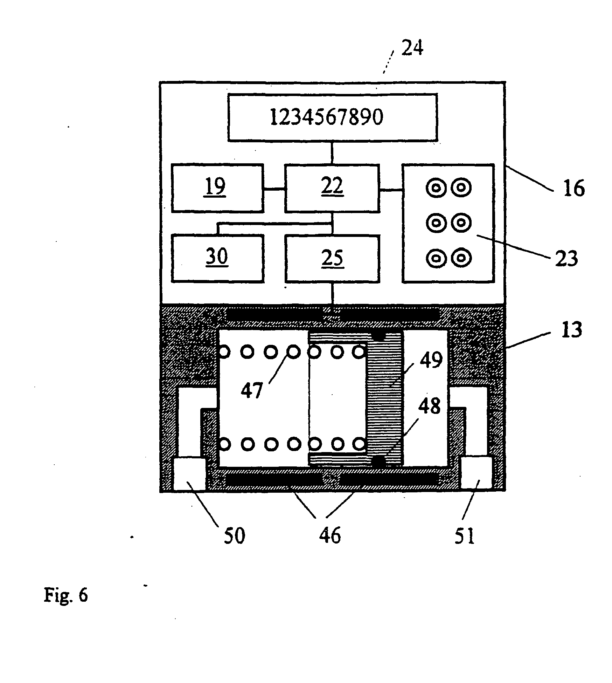

Fig. 6 zeigt ein Differenzdruck-Meßsystem (13) einer bei Einfachfiltern in Teilen bekannten Ausführungsform mit einem, durch eine Feder (47) belasteten Kolben (49), welches mit O-Ring-Dichtung (48) oder auch mit Rollmembran ausgeführt wird. Der Differenzdruck ergibt sich aus den am Niederdruckanschluß (50) und am Hochdruckanschluß (51) anliegenden Drücken. Die Position des Kolbens (49) wird als Maß für die Druckdifferenz magnetisch durch die Gehäusewand übertragen und beispielsweise mittels einer Drehscheibe, die unterscheidbare, z.B. grün- oder rottarbige, Bereiche aufweist, angezeigt. Dazu ist es bekannt, den Kolben (49) und die Drehscheibe mit Magneten zu bestücken oder auch die Abtastung einzelner Positionen mit Reed-Schaltern durchzuführen. Erfindungsgemäß weist das Differenzdruck-Meßsystem (13) Mittel auf, so daß ein dem Differenzdruck entsprechendes analoges elektrisches Signal entsteht. Dieses Signal ist dann weiterverwendbar. Dazu weist das Differenzdruck-Meßsystem (13) in einer günstigen Ausgestaltung eine oder mehrere Spulen als Meßspulen (46) auf, die vorteilhafterweise sich im Gehäuse des Differenzdruck-Meßsystems (13) befinden. So sind sie gegen äußere Einwirkungen geschützt. Bei Kunststoffgehäusen können die Spulen (46) auch miteingespritzt werden. Setzt man beispielsweise zwei Spulen (48) ein, so bilden diese die sehr temperaturstabile Schaltungsmöglichkeit als Differenzspulen-Längsanker-Induktivaufnehmer. Die Verwendung einer einzigen Spule ist jedoch auch möglich. Dafür bietet sich die Schaltung als Längsanker-Indukdvaufnehmer oder als Langsanker-Wirbelstromaufnehmer an. Eine weitere Ausführungsform des Differenzdruck-Meßaufnehmers (13) sieht ein elektronisches Abtasten des vom Kolben (49) erzeugten Magnetfeldes mit einem Magnetfeldsensor oder einer sogenannten Feldplatte vor. Eine andere Lösung der Unterbringung eines Meßmittels, insbesondere einer Spule (48), sieht vor, diese außerhalb des Gehäuses anzulagern, beispielsweise bei einer Spule (48) diese um das Gehäuse zu wickeln. Für besondere Einsatzgebiete kann ein Meßmittel auch im Bereich der Zentralachse, also innerhalb der Feder (47) untergebracht sein. Dieses ermöglicht die Verwendung eines Metallgehäuses für das Differenzdruck-Meßsystem (13). Das aufgenommene Signal wird über einen Wandler (25) verstärkt und anschließend einer Recheneinheit (22) zur Verfügung gestellt. Die Recheneinheit (22) dient als Controller und kann zur Relationsbildung verschiedener Parameter genutzt werden. Das Meßsignal oder auch andere Werte können in einem Speicher (19) abgelegt und bei Bedarf dort abgerufen werden. Eine weitere vorteilhafte Ausführung des Differenzdruck-Meßsystems (13) ergibt sich bei direkter Verbindung desselben mit der Auswertelektronik (16), beispielsweise in einem gemeinsamen Gehäuse. Über eine ebenfalls anbringbare Eingabeeinheit (23) sowie einer Anzeigeeinheit (24) können dann Werte eingegeben und überprüft werden. Die Anzeigeeinheit (24) kann auch zur Darstellung entsprechender Mitteilungen der Auswerteelektronik (16) genutzt werden. Die Darstellungen auf der Anzeigeeinheit (24) sind alphanumerisch oder auch anders ausführbar, je nachdem, welcher Nutzen damit verbunden werden soll. Die Eingabeeinheit (23) ist entsprechend den zu bearbeitenden Werten gestaltbar, so daß beispielsweise auf besondere Dimensionen bezogene Werte, z.B DM/kWh, direkt eingebbar sind. Der Betrieb des Differenzdruck-Meßaufnehmers (13) ist über einen Netzanschluß möglich. Weiter von einem elektrischen Netz entfernte Differenzdruck-Meßaufnehmer (13) können mittels einer Batterie (30) oder eines Akkumulators betrieben werden. Die Anzeigeeinheit (24) darf bei nur einem begrenzt zur Verfügung stehenden Energieangebotes auch nur wenig Energie verbrauchen. Dieses kann mittels eines LCD-Displays erreicht werden. Eine weitere Reduzierung des Energieverbrauches erhält man bei einer nichtkontinuierlichen und damit in Zeitabständen stattfindenden Wegmessung.

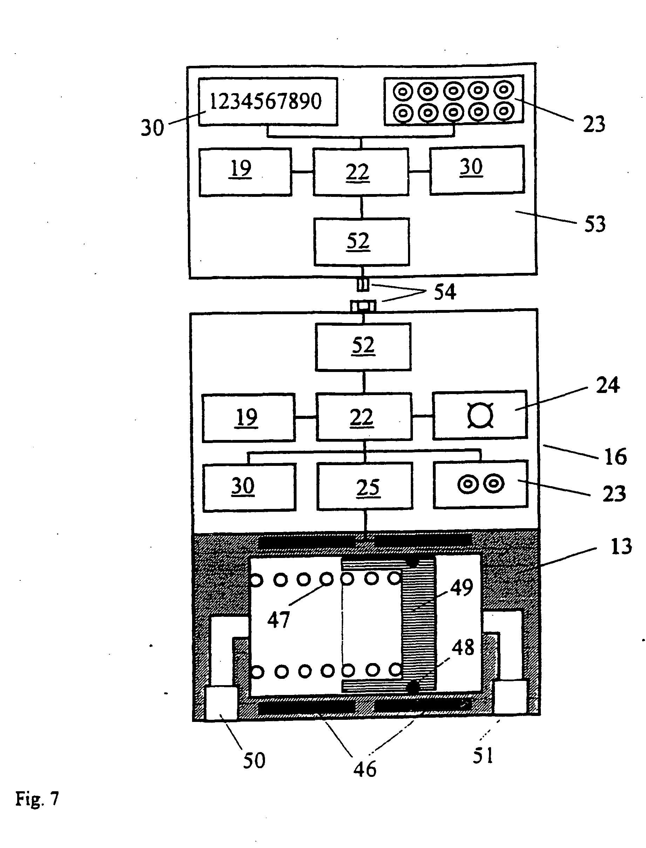

Fig. 7 zeigt eine weitere vorteilhafte Ausführungsform eines Differenzdruck-Meßaufnehmers (13). Er besitzt zusätzlich eine Programmiereinheit (53). Die Auswerteelektronik (16) hat nun eine einfache Eingabeeinheit (23), um zum Beispiel die Logik mittels einer einzigen Taste über erfolgte Filterwechsel zu informieren. Die Anzeigeeinheit (24) ist ebenfalls einfach gehalten. Ein notwendiger Filterwechsel kann beispielsweise über eine einzige LED dem Betreiber angezeigt werden. Die Programmierung erfolgt über die Programmiereinheit (53), die über eine Schnittstelle (52) mit der Auswerteelektronik (16) verbindbar ist Dazu kann die Programmiereinheit (53) mittels geeigneter Mittel und geeigneter Signalübertragungsbahnen, vor allem elektrischer Kontakte (54), auf die Auswerteelektronik (16) aufgesteckt werden und dort verbleben. Ein Betreiber mit mehreren Filtern benötigt dann vorteihafterweise nur eine Programmiereinheit (53), die aber für alle Filter verwendbar ist. Die Unterteilung des Differenzdruck-Meßaufnehmers (13) in voneinander trennbare Teile ermöglicht je nach Aufbau dieser ein transportables auf mehrere Filter (4) passendes Element. Die Zusammensetzung dieser Einheit, ob mit Auswerteelektronik (16) und Programmiereinheit (52) oder mit einem digitalen Display (28), kann je nach Einsatzzweck gestaltet werden. Eine andere Möglichkeit der Programmierung der einzelnen Filter ist auch durch Verwendung entsprechender Sender und Empfänger möglich. Dieses ist beispielsweise bei sehr verwinkelten Anlagen mit nur sehr schwer zugänglichen Filtern von Vorteil. Eine Schnittstelle (52) der Auswerteelektronik (16) ermöglicht es weiterhin, diese auch an ein Überwachungsnetz (BUS) anzuschließen. Ein Nachladen eines Akkumulators, der beispielsweise zur Auswerteelektronik (16) gehört, ist damit ebenfalls möglich.

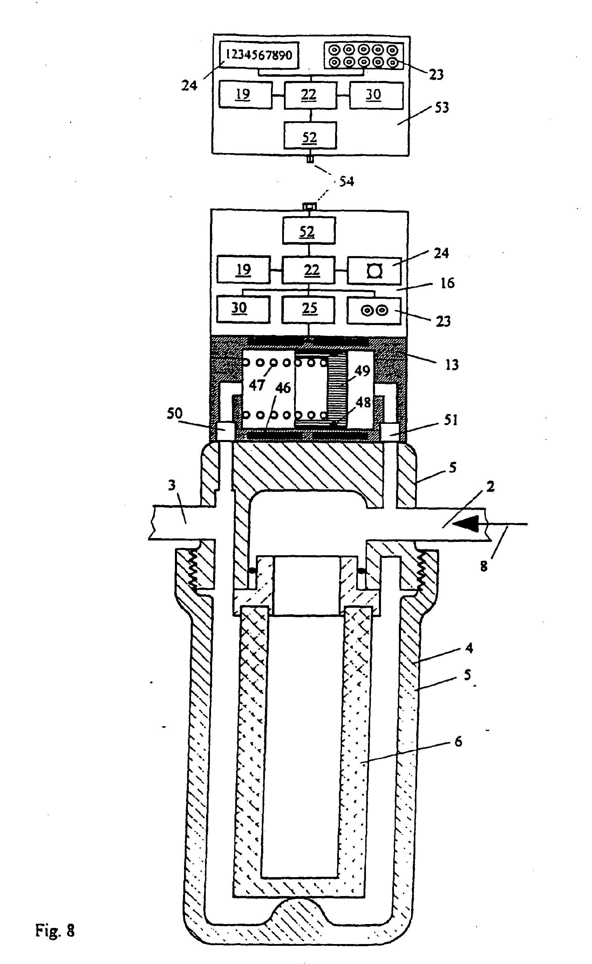

Fig. 8 zeigt ein direkt an einer zu überwachenden Konditioniervorrichtung (1), zum Beispiel einem Filter mit Wegwerfkerze, angebrachtes Differenzdruck-Meßsystem (13) mit Auswerteelektronik (16). Die Gehäuse der Geräte können auch miteinander vereinigt sein, so daß der Differenzdruck-Meßaufnehmer (13) bzw. die Auswerteelektronik (16) im Filtergehäuse untergebracht sind.

Die Figuren zeigen lediglich Ausführungsbeispiele der Erfindung und sollen diese nicht einschränken. Ingesamt ermöglicht die Erfindung die kostenorientierte Überwachung des Betriebszustandes einer austauschbaren oder regenerierbaren von einem Fluid durchflossenen Regeniervorrichtung in einer Gesamtanlage und empfiehlt den Austausch oder die Regenerierung für den Zeitpunkt, ab dem der Austausch oder die Regenerierung kostensparender ist als der Weiterbetrieb hin zum völligen technischen Verbrauch der Konditioniervorrichtung.

BEZUGSZEICHENLISTE

| 1 | Konditioniervorrichtung |
|---|---|
| 2 | Zuströmleitung, Eintritt |
| 3 | Abströmleitung, Austritt |
| 4 | Filter |
| 5, 5a, 5b | Filtergehäuse |
| 6 | Filterelement |
| 7 | Fluid |
| 8 | Fluidstrom |
| 9 | Sensor |
| 10 | Drucksensor |
| 11 | Durchflußsensor |
| 12 | Druckaufnehmer |

| | | |
|---|---|---|
| 13 | Differenzdruck-Meßsystem | |
| 14 | Volumenstrom-Meßsystem | |
| 15 | Drehzahlgeber | |
| 16 | Auswerteelektronik | |
| 17 | Gehäuse | |
| 18 | Meßwerteingang | |
| 19 | nichtflüchtiger Speicher, Speicher | |
| 20 | Funktionsspeicher | |
| 21 | Betriebswertspeicher | |
| 22 | Recheneinheit | |
| 23 | Eingabeeinheit | |
| 24 | Anzeigeinstrument, Anzeigeeinheit | |
| 25 | Wandler | |
| 26 | Ausgabeeinheit | |
| 27 | Drehzeigerinstrument | |
| 28 | digitales Display | |
| 29 | Signalleuchte | |
| 30 | Batterie | |
| 31 | Stromnetz | |
| 32 | Umgebung | |
| 33 | Pumpe | |
| 34 | erste Bohrung | |
| 35 | zweite Bohrung | |
| 36. | dritte Bohrung | |
| 37 | Tasten | |
| 38 | Signalausgang | |
| 39 | Elektromagnetfilter | |
| 40 | Kupferspule | |
| 41 | Absperrarmatur | |
| 42 | Regeneriermittel | |
| 43 | Spülleitung | |
| 44 | Entsorgungsleitung | |
| 45 | Arbeitsmaschine | |
| 46 | Meßspule | |
| 47 | Feder | |
| 48 | Dichtung | |
| 49 | Kolben | |
| 50 | Niederdruckanschluß | |
| 51 | Hochdruckanschluß | |
| 52 | Schnittstelleneinheit | |
| 53 | Programmiereinheit | |
| 54 | Kontakte, elektrische Kontakte | |
| A(n) | Steigung | |
| DP | Differenzdruck | |
| Kbm | mittlere Betriebskosten pro Zeiteinheit | |
| Sbr | Betriebsreservesignal | |
| Sdp | Meßwert | |
| Srld | Restlebensdauer | |
| Sv | Meßwert | |
| V | Volumenstrom, Fluidmengenstrom | |
| X, Kk, Ks | Kostengröße | |
| ΔEa | Energieverlust | |
| ΔN | Leistungsverlust | |
| ΔN(n) | augenblickliche Leistungsverlust | |
| ΔTa | Zeitintervall | |
| ΔT1 | Gesamtzeitintervall, Betriebszeit | |
| ΔT2 | Restlebensdauer | |
| ΔT3 | Maximallebensdauer | |

**Patentansprüche**

1. Verfahren zur kostenorientierten Überwachung und/oder Anzeige des Betriebszustandes einer austauschbaren oder regenerierbaren von einem Fluid (7) durchflossenen Konditioniervorrichtung (1), nämlich einer Vorrichtung oder Anlage, die ein Fluid von mechanischen oder chemischen Verunreinigungen reinigen oder gelöste inhaltsstoffe entfernen oder die Temperatur oder den Aggregatzustand des Fluides ändern, in einer Gesamtanlage, insbesondere eines Filters (4), wobei mittels mindestens eines Sensors (9; 10; 11) kontinuierlich oder in Abständen mindestens ein Meßwert (Sdp; Sv) gemessen wird, aus dem sich der Verbrauchszustand der Konditioniervorrichtung ableiten läßt, mit folgenden Schritten:

   - der Meßwert (Sdp; Sv) wird einer Auswerteelektronik (16) zugeführt;
   - der Verbrauchszustand der Konditioniervorrichtung (1) wird aus den Meßwerten (Sdp; Sv) bestimmt;
   - anhand in der Auswerteelektronik (16) gespeicherter Daten und/oder funktionaler Abhängigkeiten unter Berücksichtigung von Energiekosten und spezifischen, die Konditioniervorrichtung (1) betreffenden Kosten, werden die Auswirkungen des Verbrauchszustandes der Konditioniervorrichtung (1) auf die Betriebskosten der Gesamtanlage zumindest näherungsweise bestimmt;
   - anhand in der Auswerteelektronik (16) gespeicherter Daten und/oder funktionaler Abhängigkeiten werden die Kosten für ein Austauschen oder Regenerieren der Konditioniervorrichtung (1) ermittelt und mit den Auswirkungen des Verbrauchszustandes auf die Betriebskosten verglichen;
   - an einem Anzeigeinstrument (24) erfolgt eine entsprechende Anzeige ab dem Zeitpunkt, ab dem der Austausch bzw. die Regenerierung insgesamt kostensparender ist als der Weiterbetrieb hin zum völligen technischen Verbrauch der Konditioniervorrichtung (1).

2. Verfahren nach Anspruch 1, **dadurch gekennzeichnet, daß** die Messungen und Berechnungen in Zeitabständen durchgeführt werden, wobei die durch den Verbrauchszustand der Konditioniervorrichtung verursachten Kosten durch Energieverluste für jedes zwischen zwei Messungen liegende Zeitintervall berechnet und aus diesen Werten die Gesamtkosten seit der letzten Regenerierung bzw. dem letzten Austausch der Konditionienrorrichtung. errechnet werden, wobei insbesondere Kosten für Minderproduktion wegen des Verbrauchszustandes der Konditioniervorrichtung als fiktive Kosten zu den Kosten durch Energieverluste addiert werden können.

3. Verfahren nach Anspruch 2, **dadurch gekennzeichnet, daß** zu dem Gesamtenergieverlust zu jedem Berechnungszeitpunkt ein fiktiver Energieverlust addiert wird, der den Kosten für die Regenerierung bzw. den Austausch der Konditioniervorrichtung entspricht.

4. Verfahren nach Anspruch 3, **dadurch gekennzeichnet, daß** die Summe aus Gesamtenergieverlust und fiktivem Energieverlust zu jedem Berechnungszeitpunkt durch die seit der letzten Regenerierung bzw. dem letzten Austausch vergangene Zeit, gegebenenfalls zuzüglich der für die Regenerierung bzw. den Austausch benötigten Zeit, geteilt und der Quotient mit dem Quotient des vorhergehenden Berechnungszeitpunktes verglichen wird, wobei ein Signal generiert wird, wenn der Quotient größer als der vorhergehende Quotient ist.

5. Verfahren nach einem der vorhergehenden Ansprüche, **dadurch gekennzeichnet, daß** bei Austausch oder Regenerierung eine Speicherung kennzeichnender Betriebsdaten des abgeschlossenen Betriebzyklusses zur Langzeitauswertung in der Auswerteelektronik (16) erfolgt, was insbesondere bei nicht vollständig regenerierbaren Konditioniervorrichtungen eine überlagerte Betrachtung ermöglicht, wann die Konditioniervorrichtung ausgetauscht statt regeneriert werden sollte.

6. Verfahren nach einem der vorhergehenden Ansprüche, **dadurch gekennzeichnet, daß** die Konditioniervorrichtung (1) ein Filterelement (6) zur Reinigung von Fluiden (7) ist, bei dem sich der Strömungswiderstand mit zunehmendem Verbrauch erhöht

7. Verfahren nach einem der vorhergehenden Ansprüche, **dadurch gekennzeichnet, daß** als Meßwerte (Sdp; Sv) zur Ableitung des Verbrauchszustandes der Konditioniervorrichtung (1) der Druckverlust (DP) über der Konditioniervorrichtung (1) und die Durchflußmenge (V) an Fluid (7) durch die Konditioniervorrichtung (1) gemessen werden.

8. Verfahren nach einem der vorhergehenden Ansprüche, **dadurch gekennzeichnet, daß** aus dem zeitlichen Verlauf des ermittelten Verbrauchszustandes der Konditioniervorrichtung (1) unter Hinzuziehung von gespeicherten Erfahrungswerten oder Erfahrungsfunktionen die Maximallebensdauer ($\Delta T3$) und/oder Leistungsfähigkeit bis zum völligen technischen Verbrauch der Konditioniervorrichtung (1) durch Extrapolation ermittelt und angezeigt wird.

9. Verfahren nach einem der vorhergehenden Ansprüche, **dadurch gekennzeichnet, daß** die Ermittlung der Meßwerte (Sdp; Sv) in vorgebbaren Zeitintervallen (∆Ta) erfolgt, insbesondere in Abständen von 1 Minute bis 24 Stunden.

10. Verfahren nach einem der vorhergehenden Ansprüche, wobei die Konditioniervorrichtung (1) ein zwischen einer Zuströmleitung (2) und einer Abströmleitung (3) angeordnetes Filter (4) mit Filterelement (6) enthält und wobei unter Annhme eines etwa konstanten vorgegebenen Fluidmengenstromes (V) der Differenzdruck (DP) über dem Filter (4) als Meßwert (Sdp) gemessen wird, **gekennzeichnet durch** folgende Schritte:

a. Berechnung und Speicherung eines Leistungsverlustes (∆N), welchen die Verschmutzung des Filterelementes (6) wegen des damit verbundenen erhöhten Differenzdruckes (DP) verursacht, als Funktion (∆N = f (DP)) des Differenzdruckes (DP) in einem Funktionsspeicher (20) der Auswerteelektronik (16);
b. Ermittlung des augenblicklichen Differenzdruckes (DPa) in vorgegebenen Zeitintervallen (∆Ta) aus den Meßwerten (Sdp);
c. Ermittlung des augenblicklichen Leistungsverlustes (∆N(n)) anhand der im Funktionsspeicher (20) gespeicherten Funktion (∆N = f (DP));
d. Ermittlung des augenblicklichen Energieverlustes (∆Ea), welchen der ermittelte Leistungsverlust (AN) im letzten Zeitintervall (∆Ta) verursacht hat, insbesondere nach der Formel

$$\Delta Ea = \Delta Ta \ ^* \ (\Delta N(n) + \Delta N(n\text{-}1)) \ / \ 2,$$

wobei der augenblickliche Leistungsverlust ∆N(n-1) zu Beginn und der augenblickliche Leistungsverlust ∆N(n) am Ende des letzten Zeitintervall (∆Ta) gilt;
e. Bildung einer Energiesumme (∆E) vorzugsweise aller augenblicldichen Energieverluste (∆Ea), die in allen zu einem Gesamtzeitintervall (∆T1) aufsummierten Zeitintervallen (∆Ta) seit dem Beginn des Betriebes des Filters (4) mit einem sauberen Filterelement (6) entstanden sind;
f. Bildung einer Kostensumme (ΣK), vorzugsweise nach der Formel ΣK = ∆E "X + Kk + Ks , die insgesamt bei einem Austausch oder einer Regeneration des Filterelementes (6) zum derzeitigen Zeitpunkt (T1) entstehen würden, wobei X die Kosten der Energieeinheit angibt, Kk die Kosten des neuen Filterelementes (6) oder die Kosten der Regeneration des Filterelementes (6) und Ks sonstige mit dem Betrieb des Filters (4) und Regeneration oder Austausch und Entsorgung des verschmutzen Filterelementes (6) verbundenen Kosten;
g. Berechnung von vorzugsweise mittleren Betriebskosten pro Zeiteinheit (Kbm) für das Gesamtzeitintervall (∆T1), insbesondere nach der Formel Kbm = ΣK / ∆T1 ;
h. Berechnung der augenblicklichen Ableitung nach der Zeit (t) der mittleren Betriebskosten pro Zeiteinheit, insbesondere nach der Formel A(n) = (Kbm(n) - Kbm(n-1)) / ∆Ta , und Speicherung dieses Wertes der augenblicklichen Steigung (A(n)) in einem Betriebswertspeicher (21);
i. Auslösung einer Warnanzeige auf einem Anzeigeinstrument (24), wenn die augenblickliche Steigung (A(n)) einen Wert gleich oder größer als Null annimmt.

11. Verfahren nach Anspruch 10, wobei statt der Annahme eines konstanten vorgegebenen Fluidmengenstromes (V) dieser als Meßwert (SV) gemessen wird und bei der Berechnung des Leistungsverlustes (∆N) mit berücksichtigt wird.

12. Verfahren nach einem der vorhergehenden Ansprüche, **dadurch gekennzeichnet, daß** bei Austausch oder Regenerierung des Filterelementes (6) eine Speicherung kennzeichnender Betriebsdaten zur Langzeitauswertung im Betriebswertspeicher (21) für den abgeschlossenen Betriebryklus und für den Beginn des neuen erfolgt.

13. Verfahren nach einem der Ansprüche 10, 11 oder 12, **dadurch gekennzeichnet, daß** aus dem Verlauf der Funktion der mittleren Betriebskosten pro Zeiteinheit (Kbm) in Abhängigkeit von der Zeit (t) ein Trend dieser Funktion ermittelt und ein Betriebsreservesignal (Sbr) in Abhängigkeit von dem ermittelten Trend generiert wird.

14. Verfahren nach Anspruch 13, **dadurch gekennzeichnet,**

- **daß** aus dem Betriebsreservesignal (Sbr) ein Restlebensdauersignal (Srld) wird,
- **daß** aus der Signalgröße des Restlebensdauersignales (Srld) eine bis zum empfohlenen Austausch oder bis zur empfohlenen Regenerierung des Filterelementes (6) erwartete Restlebensdauer (∆T2) ermittelt wird,
- **daß** aus einer Anzahl von m+1 Steigungen (A(n), A(n-1), A(n-2), ... A(n-m)) der Betriebskostenkurve der weitere zeitliche Verlauf der mittleren Betriebskosten pro Zeiteinheit (Kbm) bestimmt wird, wobei m vorzugsweise mindestens den Wert drei hat,
- **daß** der Zeitpunkt berechnet wird, an dem die Betriebskosten pro Zeiteinheit (Kbm) einen kleinsten Wert annehmen und die Steigung (An) gleich oder größer Null sein wird.

**15.** Verfahren nach Anspruch 14, **dadurch gekennzeichnet, daß** als Restlebensdauer (AT2) das Zeitintervall zwischen dem durch das Gesamtzeitintervall (∆T1) beschriebenen augenblicklichen Zeitpunkt (T1) und dem Zeitpunkt bestimmt wird, zu dem die mittleren Betriebskosten pro Zeiteinheit (Kbm) ihren kleinsten Wert annehmen werden.

**16.** Verfahren nach einem der Ansprüche 13 bis 15, **dadurch gekennzeichnet, daß** aus dem Betriebsreservesignal (Sbr) die Restlebensdauer (∆T2) auf einem Anzeigeinstrument (24) zur Anzeige gebracht wird.

**17.** Verfahren nach einem der Ansprüche 10 bis 16, **dadurch gekennzeichnet, daß** die eingegebenen Kosten (X) einer Energieeinheit Kosten der elektrischen Energieeinheit und einen Wirkungsgrad der Druckerzeugung für das Fluid (7) beinhalten.

**18.** Verfahren nach einem der vorhergehenden Ansprüche, **dadurch gekennzeichnet, daß** bei einer regenerierbaren Konditioniervorrichtung (1) aus der Vielzahl der nach erfolgten Regenerierungen der Konditioniervorrichtung (1), insbesondere eines Filterelementes (6), für den jeweils abgeschlossenen Betriebzyldus und den Beginn des jeweils neuen gespeicherten kennzeichnenden Betriebsdaten die Auswirkungen einer nach der jeweiligen Regenerierung verbleibenden Änderung des Betriebszustandes, insbesondere einer Restverschmutzung, auf die Betriebskosten der Gesamtanlage und/oder auf die Regenerierungskosten zumindest näherungsweise bestimmt werden, woraus insbesondere in einer überlagerten Überwachung die Gesamtkosten des Betriebes einschließlich der angefallenen Regenerierungskosten berechnet werden können.

**19.** Verfahren nach Anspruch 18, **dadurch gekennzeichnet, daß** an einem Anzeigeinstrument (24), insbesondere an einem der Konditioniervorrichtung (1) zugeordneten Anzeigeinstrument (24), ein Signal erfolgt, daß zu einem Zeitpunkt ein Austausch mindestens eines Teiles der Konditioniervorrichtung kostensparender ist als der Weiterbetrieb mit Regenerierungen.

**20.** Vorrichtung zur kostenorientierten Überwachung und/oder Anzeige des Betriebszustandes einer austauschbaren oder regenerierbaren, von einem. Fluid (7) durchflossenen Konditioniervorrichtung (1), nämlich einer Vorrichtung oder Anlage, die ein Fluid von mechanischen oder chemischen Verunreinigungen reinigen oder gelöste Inhaltsstoffe entfernen oder die Temperatur oder den Aggregatzustand des Fluids ändern, insbesondere eines Filters (4), in einer Gesamtanlage, bei der mittels mindestens eines Sensors (9; 10; 11) kontinuierlich oder in Abständen mindestens ein Meßwert (Sdp; Sv) gemessen wird, aus dem sich der Verbrauchszustand der Konditioniervorrichtung (1) ableiten läßt, wobei die Vorrichtung die folgenden Merkmale aufweist:

mindestens einen Sensor (9; 10; 11) zur Erzeugung von Meßwerten (Sdp; Sv), aus denen in einer Auswerteelektronik (16) der Verbrauchszustand der Konditioniervorrichtung (1) ermittelbar ist;
- eine der Konditioniervorrichtung (1) zugeordnete Auswerteelektronik (16) mit einer Eingabeeinheit (23) für Daten und zumindest einem Meßwerteingang (18), wobei
- in der Auswerteelektronik (16) nicht flüchtige Speicher (19) für vorgebbare Werte von Energiekosten, Regenerierungs- und/oder Auswechselkosten der Konditioniervorrichtung (1) und/oder funktionale Zusammenhänge von Parametern sowie zur Langzeitspeicherung von Betriebsdaten vorhanden sind, und
- die Auswerteelektronik (16) eine Recheneinheit (22) zur Berechnung der Kosten für einen Austausche oder eine Regenerierung der Konditioniervorrichtung anhand in der Auswerteelektronik gespeicherten Daten und/oder funktionalen Abhängigkeiten und zum Vergleichen dieser Kosten mit den Auswirkungen des Verbrauchszustands auf die Betriebskosten des Gesamtanlage und eine Ausgabeeinheit (26) zur Ansteuerung eines Anzeigeinstrumentes (24) oder Abgabe eines Signales über einen zusätzlichen Signalausgang (38) aufweist; und
- ein Anzeigeinstrument (24) zur Anzeige des in der Auswerteelektronik (16) ermittelten Zeitpunkts, ab dem der Austausch bzw. die Regenerierung insgesamt kostensparender ist als der Weiterbetrieb hin zum völligen technischen Verbrauch der Konditioniervorrichtung (1).

**21.** Vorrichtung nach Anspruch 20, **dadurch gekennzeichnet, daß** sie die folgenden Komponenten enthält:

- einen den Differenzdruck (DP) des Filterelementes (6) kennzeichnenden Meßwert (Sdp) abgebenden Drucksensor (10);
- einen Wandler (25) zum Empfang der Meßwerte (Sdp) über Meßwerteingänge (18) und/oder die Ermittlung des augenblicklichen Differenzdruckes (DPa) aus den Meßwerten (Sdp);
- einen Funktionsspeicher (20), vorzugsweise zur Speicherung eines Leistungsverlustes ($\Delta N$) in Abhängigkeit vom Differenzdruck (DP) des Filterelementes (6) als Variablen einer Funktion ($\Delta N = f$ (DP));
- Mittel zur Eingabe einer Funktion und/oder einer Kostengröße (X; Kk; Ks) und/oder eines Zeitintervalles ($\Delta Ta$);
- eine Recheneinheit (22) mit Speicher (19) und/oder eine Betriebswertspeicher (21);
- Mittel zur Generierung eines Betriebsreservesignals (Sbr);
- Mittel zur Anzeige des Betriebsreservesignals (Sbr).

22. Vorrichtung nach Anspruch 21, **dadurch gekennzeichnet, daß** zusätzlich ein den Fluidmengenstrom (V) kennzeichnende Meßwerte (Sv) abgebender Durchflußsensor (11) vorhanden ist, dessen Meßwerte (Sv) ebenfalls der Recheneinheit (22) zugeführt werden, wobei der Funktionsspeicher vorzugsweise den Leistungsverlust ($\Delta N$) in Abhängigkeit vom Differenzdruck (DP) des Filterelementes (6) und vom Fluidmengenstrom (V) als Variablen einer Funktion ($\Delta N = f$ (DP; V)) enthält.

23. Vorrichtung nach Anspruch 20, 21, oder 22 **dadurch gekennzeichnet, daß** diese unmittelbar räumlich einer Konditioniervorrichtung (1), insbesondere einem Filter (4) oder Filtergehäuse (5, 5a, 5b) zugeordnet ist.

24. Vorrichtung nach einem der Ansprüche 20 bis 23, **dadurch gekennzeichnet, daß** zumindest ein Teil der Vorrichtung durch eine lösbare, elektrische Kontakte (54) beinhaltende Verbindung mit der übrigen Vorrichtung verbindbar ist.

25. Vorrichtung nach Anspruch 24 **dadurch gekennzeichnet, daß** diese eine abnehmbare Tastatur und/oder ein abnehmbares Display aufweist.

26. Vorrichtung nach einem der Ansprüche 20 bis 25, **dadurch gekennzeichnet, daß** die Auswerteeinheit eine Meßelektronik aufweist.

27. Vorrichtung nach einem der Ansprüche 20 bis 26, **dadurch gekennzeichnet, daß** stromaufwärts des Filterelementes (6) und stromabwärts des Filterelementes (6) ein Drucksensor (10) vorhanden ist.

28. Vorrichtung nach einem der Ansprüche 20 bis 26, **dadurch gekennzeichnet, daß** der Meßwertaufnehmer, der den kennzeichnenden Meßwert (Sdp) des Differenzdruckes (DP) über das Filterelement (6) abgibt, ein Druckaufnehmer (12) ist, der stromabwärts des Filterelementes (6) angeschlossen ist und den Unterdruck gegenüber dem Umgebungsdruck mißt und daß die Zuströmleitung (2) des Filters (4) das Fluid (7), insbesondere Luft, aus der Umgebung (32) empfängt.

29. Vorrichtung nach einem der Ansprüche 21 bis 26, **dadurch gekennzeichnet, daß** das Differenzdruck-Meßsystem (13) einen elektrischen Analogausgang aufweist.

30. Vorrichtung nach einem der Ansprüche 20 bis 29, **dadurch gekennzeichnet, daß** diese einen den Fluidmengenstrom (V) messenden Sensor (11) aufweist.

31. Vorrichtung nach Anspruch 30, **dadurch gekennzeichnet, daß** der Durchflußsensor (11) ein den dynamischen Druck des strömenden Fluids (7) messendes Differenzdruck-Meßsystem (13) ist.

32. Vorrichtung nach Anspruch 30, **dadurch gekennzeichnet, daß** der Durchflußsensor (11) ein die Drehzahl einer dem Filter (4) nachgeschalteten Arbeitsmaschine messender Drehzahlgeber (15) ist

33. Vorrichtung nach Anspruch 30, **dadurch gekennzeichnet, daß** der Durchflußsensor (11) ein die Drehzahl der den Fluidmengenstrom (V) erzeugenden Pumpe (33) messender Drehzahlgeber (15) ist.

34. Vorrichtung nach einem der Ansprüche 20 bis 33, **dadurch gekennzeichnet, daß** die Restlebensdauer ($\Delta T2$) an einem Anzeigeinstrument (27; 28; 29) anzeigbar ist.

35. Vorrichtung nach einem der Ansprüche 20 bis 34, **dadurch gekennzeichnet, daß** als Energieversorgung eine Batterie (30) oder ein Akkumulator vorhanden sind.

36. Vorrichtung nach einem der Ansprüche 20 bis 34, **dadurch gekennzeichnet, daß** die Vorrichtung eine Verbindung an ein Stromnetz (31) aufweist.

**37.** Vorrichtung nach einem der Ansprüche 20 bis 36, **dadurch gekennzeichnet, daß** die gesamte Vorrichtung in ein Gehäuse (5a; 5b) einer Konditioniervorrichtung, insbesondere eines Filters (4), integriert ist.

**38.** Vorrichtung nach einem der Ansprüche 20 bis 36, **dadurch gekennzeichnet, daß** die gesamte Vorrichtung in ein Gehäuse (17) integriert ist, das an einem Gehäuse (5) des Filters (4) befestigt ist.

**39.** Vorrichtung nach einem der Ansprüche 20 bis 36, **dadurch gekennzeichnet, daß** die Auswerteelektronik (16) direkt an der Konditioniervorrichtung (1) befestigt ist.

**Claims**

**1.** A method for cost-orientated monitoring and/or display of the operating condition of a replaceable or regenerable conditioning device (1) flowed through by a fluid (7), that is to say of a device or installation which cleanses a fluid of mechanical or chemical contaminants or removes dissolved contents or alters the temperature or the state of aggregation of the fluid, in a whole installation, in particular of a filter (4), wherein by means of at least one sensor (9; 10; 11) at least one value (Sdp; Sv) from which the state of wear of the conditioning device can be deduced is measured continuously or at intervals, with the following steps:

- the measured value (Sdp; Sv) is supplied to an electronic evaluation means (16);
- the state of wear of the conditioning device (1) is determined from the measured values (Sdp; Sv);
- by means of the data and/or functional dependencies stored in the electronic evaluation means (16), taking into account energy costs and specific costs relating to the conditioning device (1), the effects of the state of wear of the conditioning device (1) upon the operating costs of the whole installation are at least approximately determined;
- by means of the data and/or functional dependencies stored in the electronic evaluation means (16), the costs for replacement or regeneration of the conditioning device (1) are determined and compared to the effects of the state of wear upon the operating costs;
- an appropriate indication appears on a display (24) from die time from which the replacement or regeneration is overall more cost saving than further operation until complete technical exhaustion of the conditioning device (1).

**2.** Method according to claim 1, **characterised in that** the measurements and calculations are carried out at intervals, wherein the costs of energy losses caused by means of the state of wear of the conditioning device are calculated for every interval in between two measurements and from these values the overall costs since the last regeneration or the last replacement of the conditioning device are calculated, wherein in particular costs for lower production because of the state of wear of the conditioning device can be added as hypothetical costs to the costs of energy losses.

**3.** Method according to claim 2, **characterised in that** a hypothetical energy loss, which corresponds to the costs for regeneration or replacement of the conditioning device, is added to the total energy loss at each time of calculation.

**4.** Method according to claim 3, **characterised in that** the sum of the total energy loss and the hypothetical energy loss at each time of calculation is divided by the time elapsed since the last regeneration or the last replacement, possibly plus the time needed for the regeneration or the replacement, and the quotient is compared with the quotient at the previous time of calculation, wherein a signal is generated when the quotient is greater than the previous quotient.

**5.** Method according to one of the preceding claims, **characterised in that** when replacement or regeneration takes place, characteristic operating data of the completed operating cycle is stored in the electronic evaluation means (16) for long term evaluation, which, in particular in the case of conditioning devices which cannot be completely regenerated, allows a higher level of consideration of when the conditioning device should be replaced rather than regenerated.

**6.** Method according to one of the preceding claims, **characterised in that** the conditioning device (1) is a filter element (6) for cleamsing fluids (7), in which the flow resistance increases with increasing wear.

**7.** Method according to one of the preceding claims, **characterised in that** the pressure loss (DP) over the conditioning

**EP 0 808 206 B2**

device (1) and the amount of through-flow (V) of fluid (7) through the conditioning device (1) are measured as the measured values (Sdp; Sv) for deducing the state of wear of the conditioning device (1).

8. Method according to one of the preceding claims, **characterised in that** from the development over time of the determined state of wear of the conditioning device (1), taking into consideration stored empirical values or stored empirical functions, the maximum lifetime ($\Delta T3$) and/or efficiency until complete technical exhaustion of the conditioning device (1) can be determined by extrapolation and displayed.

9. Method according to one of the preceding claims, **characterised in that** the determination of the measured values (Sdp; Sv) takes place at pre-determinable intervals ($\Delta Ta$), in particular at intervals of 1 minute to 24 hours.

10. Method according to one of the preceding claims, wherein the conditioning device (1) comprises a filter (4) with a filter element (6) between an inlet line (2) and an outlet line (3) and wherein assuming an approximately constant pre-determined amount of fluid flow (V), the pressure differential (DP) over the filter (4) is measured as a measured value (Sdp), **characterised by** the followin g steps:

   a. calculation and storage of a power loss ($\Delta N$), which is caused by the fouling of the filter element (6) because of the increased pressure differential (DP) linked to this, as a function ($\Delta N = f(DP)$) of the pressure differential (DP) in a function memory (20) of the electronic evaluation means (16);
   b. determination of the current pressure differential (DPa) at pre-determined intervals ($\Delta Ta$) from the measured values (Sdp);
   c. determination of the current power loss ($\Delta N(n)$) by means of the function ($\Delta N = f(DP)$) stored in the function memory (20);
   d. determination of the current energy loss ($\Delta Ea$) which the power loss ($\Delta N$) determined in the last interval ($\Delta Ta$) has caused, in particular according to the formula

$$\Delta Ea = \Delta Ta * (\Delta N(n) + \Delta N(n\text{-}1)) / 2,$$

   wherein the current power loss $\Delta N(n\text{-}1)$ applies at the beginning and the current power loss $\Delta N(n)$ at the end of the last interval ($\Delta Ta$);
   e. formation of an energy sum ($\Delta E$) preferably of all current energy losses ($\Delta Ea$) which have occurred in all the time intervals ($\Delta Ta$) since the beginning of operation the filter (4) with a clean filter element (6), summed to form a total time interval ($\Delta T1$);
   f. formation of a sum cost ($\Sigma K$) preferably according to the formula $\Sigma K = \Delta E * X + Kk + Ks$, which has occurred in total from when the filter element (6) is replaced or regenerated to the present time (T1), wherein X represents the costs of the energy unit, Kk the costs of the new filter element (6) or the costs of regeneration of the filter element (6) and Ks other costs connected with the operation of the filter (4) and regeneration or replacement and disposal of the fouled filter element (6);
   g. calculation of preferably the average operating costs per unit time (Kbm) for the total time interval ($\Delta T1$), particularly according to the formula $Kbm = \Sigma K / \Delta T1$;
   h. calculation of the current differential according to time (t) of the average operating costs per unit time, in particular according to the formulla $A(n) = (Kbm(n) - Kbm(n\text{-}1)) / \Delta Ta$, and storage of this value of the current increase ($A(n)$) in an operating characteristic memory (21);
   i. triggering of a warning display on a display means (24) when the current increase ($A(n)$) assumes a value equal to or greater than zero.

11. Method according to claim 10, wherein instead of assuming a constant pre-determined amount of flow of fluid (V), it is measured as a measured value (SV) and is taken into consideration in the calculation of the power loss ($\Delta N$).

12. Method according to one of the preceding claims, **characterised in that** when replacement or regeneration of the filter element (6) takes place, storage of the characteristic operating data for long-term evaluation takes place in the operating characteristic memory (21) for the completed operating cycle and for the beginning of the new one.

13. Method according to one of claims 10, 11 or 12, **characterised in that** from the development of the function of the average operating costs per unit time (Kbm) dependent upon the time (t), a trend in said function is determined and an operating reserve signal (Sbr) dependent upon the trend determined is generated.

**14.** Method according to claim 13, **characterised in that**

- the operating reserve signal (Sbr) becomes a remaining lifetime signal (Sr1d),
- an expected remaining lifetime (ΔT2) until recommended replacement or until recommended regeneration of the filter element (6) is determined from the signal magnitude of the remaining lifetime signal (Srld),
- from a total of m + 1 increases (A(n), A(n-1), A(n-) ... A(n-m)) of the curve of operating costs, the further development in time of the average operating costs per unit time (Kbm) is determined, wherein the value of m is preferably at least three,
- that the time is calculated at which the operating costs per unit time (Kbm) assume a lowest value and the increase (An) will be equal to or greater than zero.

**15.** Method according to claim 14, **characterised in that** the interval between the current time (T1) described by the whole time interval (ΔT1) and the time at which the average costs per unit time (Kbm) would assume their lowest value is determined as the remaining lifetime (ΔT2).

**16.** Method according to one of claims 13 to 15, **characterised in that** from the operating reserve signal (Sbr), the remaining lifetime (ΔT2) is indicated on a display (24).

**17.** Method according to one of claims 10 to 16, **characterised in that** the costs (X) of an energy unit entered include the costs of the electrical energy unit and efficiency of the production of pressure in the fluid (7).

**18.** Method according to one of the preceding claims, **characterised in that** in the case of a regenerable conditioning device (1), from the diverse characterising operating data stored for the respective completed operating cycle and the beginning of the respective new one after completed regeneration of the conditioning device (1), in particular of a filter element (6), the effects of a change in the operating conditions remaining after the respective regeneration, in particular of a residual fouling, on the operating costs of the whole installation and/or on the costs of regeneration can be at least approximately determined, from which in particular in a higher level of monitoring the total costs of the operation inclusive of the regeneration costs incurred can be calculated.

**19.** Method according to claim 18, **characterised in that** a signal appears on a display (24), in particular on a display allocated to the conditioning device (1), that at a point in time replacement of at least one part of the conditioning device is more cost-saving than further operation with regenerations.

**20.** Device for cost-orientated monitoring and/or display of the operating condition of a replaceable or regenerable conditioning device (1), flowed through by a fluid (7), that is to say of a device or installation which cleanses a fluid of mechanical or chemical contaminants or removes dissolved contents or alters the temperature or the state of aggregation of the fluid, in a whole installation, in particular of a filter (4), in which by means of at least one sensor (9; 10; 11) at least one value (Sdp; Sv) from which the state of wear of the conditioning device (1) can be deduced is measured continuously or at intervals, wherein the device is provided with the following features:

- at least one sensor (9; 10; 11) for producing measured values (Sdp; Sv) from which the state of wear of the conditioning device (1) can be determined in an electronic evaluation means (16);
- an electronic evaluation means (16) allocated to the conditioning device (1), with an input unit (23) for data and at least one measured value input (18), wherein
- non-volatile memories (19) for pre-determinable values of energy costs, costs of regeneration and/or exchange of the conditioning device (1) and/or functional dependencies of parameters, as well as for long term storage of operating data, are present in the electronic evaluation means (16), and
- the electronic evaluation means (16) is provided with a calculator (22) for calculating the costs of replacing or regenerating the conditioning device by means of data stored in the electronic evaluation means and/or functional dependencies, and, namely, comparing those costs with the effects of the state of wear upon the operating costs of the whole installation, and an output unit (26) for controlling a display (24) or output of a signal via an additional signal output (38); and
- a display (24) is present for displaying the time determined in the electronic evaluation means from which the replacement or regeneration is overall more cost saving than further operation until complete technical exhaustion of the conditioning device (1).

**21.** Device according to claim 20, **characterised in that** it comprises the following components:

- a pressure sensor (10) providing a measured value (Sdp) characterising the pressure differential (DP) of the filter element (6);

- a transformer (25) for receiving the measured values (Sdp) via measured value inputs (18) and/or the determination of the current pressure differential (DPa) from the measured values (Sdp);

- a functional memory (20), preferably for storage of a power loss ($\Delta N$) dependent upon the pressure differential (DP) of the filter element (6) as variables of a function ($\Delta N = f(DP)$);

- a means for input of a function and/or of an amount of cost (X; Kk; Ks) and/or of an interval of time ($\Delta Ta$);

- a calculator (22) with a memory (19) and/or an operating characteristic memory (21);

- a means for generating an operating reserve signal (Sbr);

- a means for display of the operating reserve signal (Sbr).

22. Device according to claim 21, **characterised in that** in addition a through-flow sensor (11) providing a measured value (Sv) characterising the amount of flow of fluid (V) is present, the measured value of which (Sv) is also supplied to the calculator (22), wherein the function memory preferably contains the power loss ($\Delta N$) dependent upon the pressure differential (DP) of the filter element (6) and of the amount of flow of the fluid (V) as variables of a function ($\Delta N = f(DP;V)$).

23. Device according to claim 20, 21 or 22, **characterised in that** it is allocated to the immediate spatial proximity of the conditioning device (1), in particular to a filter (4) or filter housing (5, 5a, 5b).

24. Device according to one of claims 20 to 23, **characterised in that** at least a part of the device can be connected to the standard device by means of a connection containing a releasable electric contact (54).

25. Device according to claim 24, **characterised in that** it is provided with a removable keyboard and/or a removable display.

26. Device according to one of claims 20 to 25, **characterised in that** the evaluation unit is provided with measuring electronics.

27. Device according to one of claims 20 to 26, **characterised in that** a pressure sensor (10) is present upstream of the filter element (6) and downstream of the filter element (6).

28. Device according to one of claims 20 to 26, **characterised in that** the measurement sensor which provides the characteristic measured value (Sdp) of the pressure differential (DP) over the filter element (6) is a pressure sensor (12) which is connected downstream of the filter element (6) and measures the low pressure in relation to the surrounding pressure, and that the inlet line (2) of the filter (4) receives the fluid (7), in particular air, from the surroundings (32).

29. Device according to one of claims 21 to 26, **characterised in that** the pressure differential measuring system (13) is provided with an electrical analog output.

30. Device according to one of claims 20 to 29, **characterised in that** it is provided with a sensor (11) measuring the amount of flow of fluid (V).

31. Device according to claim 30, **characterised in that** the through-flow sensor (11) is a pressure differential measuring system (13), measuring the dynamic pressure of the flowing fluid (7).

32. Device according to claim 30, **characterised in that** the through-flow sensor (11) is a rotational speed indicator (15), measuring the speed of a machine connected following on from the filter (4).

33. Device according to claim 30, **characterised in that** the through-flow sensor (11) is a rotational speed indicator (15), measuring the speed of the pump (33) producing the amount of flow of the fluid (V).

34. Device according to one of claims 20 to 33, **characterised in that** the remaining lifetime ($\Delta T2$) can be indicated on a display (27; 28; 29).

35. Device according to one of claims 20 to 34, **characterised in that** a battery (30) or an accumulator is provided as the energy supply.

**36.** Device according to one of claims 2 0 to 34, **characterised in that** the device is provided with a connection to mains electricity (31).

**37.** Device according to one of claims 20 to 36, **characterised in that** the whole device is integrated into a housing (5a; 5b) of a conditioning device, in particular of a filter (4).

**38.** Device according to one of claims 20 to 36, **characterised in that** the whole device is integrated into a housing (17) which is attached to a housing (5) of the filter (4).

**39.** Device according to one of claims 20 to 36, **characterised in that** the electronic evaluation means (16) is directly attached to the conditioning device (1).

**Revendications**

**1.** Procédé de contrôle et/ou d'affichage, axé sur le coût, de l'état de fonctionnement d'un dispositif de conditionnement remplaçable ou régénérable (1), parcouru par un fluide (7), à savoir un dispositif ou une installation, qui élimine des impuretés mécaniques ou chimiques d'un fluide ou retire des substances contenues à l'état dissous ou modifie la température ou l'état d'agrégation du fluide, dans une installation complète, notamment un filtre (4), selon lequel à l'aide d'au moins un capteur (9:10:11) on mesure en continu ou par intervalles au moins une valeur de mesure (Sdp; Sv), à partir de laquelle on peut dériver l'état d'utilisation du dispositif de conditionnement comprenant les étapes suivantes :

- la valeur de mesure (Sdp; Sv) est envoyée à un système électronique d'évaluation (16) ;
- l'état d'utilisation du dispositif de conditionnement (1) est déterminé par les valeurs de mesure (Sdp; Sv) ;
- sur la base de données et/ou de dépendances fonctionnelles mémorisées dans l'unité électronique d'évaluation (16), et compte tenu de coûts de l'énergie et de coûts spécifiques concernant le dispositif de conditionnement (1), les effets de l'état d'utilisation du dispositif de conditionnement (1) sur les coûts de fonctionnement de l'installation complète sont déterminés au moins de façon approximative ;
- sur la base de données et/ou de dépendances fonctionnelles, mémorisées dans l'unité électronique d'évaluation (16), les coûts pour un remplacement ou une régénération du dispositif de conditionnement (1) sont déterminés et sont comparés à des effets de l'état d'utilisation sur les coûts de fonctionnement ;
- un affichage correspondant est exécuté dans un appareil d'affichage (24) à partir de l'instant où le remplacement ou la régénération est globalement plus économique que la poursuite du fonctionnement jusqu'à la défaillance technique complète du dispositif de conditionnement (1).

**2.** Procédé selon la revendication 1, **caractérisé en ce que** les mesures et les calculs sont exécutés pendant des intervalles de temps, auquel cas les coûts, qui sont provoqués par l'état d'utilisation du dispositif de conditionnement, sont calculés sur la base de pertes d'énergie pour chaque intervalle de temps situé entre deux mesures, et à partir de ces valeurs, les coûts globaux depuis la dernière régénération ou le dernier remplacement du dispositif de conditionnement sont calculés, en particulier des coûts de production réduite en raison de l'état d'utilisation du dispositif de conditionnement pouvant être additionnés, en tant que coûts fictifs, aux coûts dus aux pertes d'énergie.

**3.** Procédé selon la revendication 2, **caractérisé en ce qu'**à chaque instant de calcul, à la perte globale d'énergie est ajoutée une perte fictive d'énergie, qui correspond aux coûts de la génération ou du remplacement du dispositif de conditionnement.

**4.** Procédé selon la revendication 3, **caractérisé en ce que** la somme de la perte totale d'énergie et de la perte fictive d'énergie à chaque instant de calcul est divisée par le temps qui s'est écoulé depuis la dernière régénération ou le dernier remplacement, éventuellement augmenté de la durée nécessaire pour la régénération ou le remplacement, et le quotient est comparé au quotient de l'instant de calcul précédent, un signal étant régénéré lorsque le quotient est supérieur au quotient précédent.

**5.** Procédé selon l'une des revendications précédentes, **caractérisé en ce que** lors du remplacement ou de la régénération, une mémorisation des données du fonctionnement caractéristiques du cycle de fonctionnement terminé s'effectue pour l'évaluation de longue durée dans l'unité électronique d'évaluation (16), ce qui permet, notamment dans le cas de dispositifs de conditionnement ne pouvant pas être complètement régénérés, de tenir compte conjointement du moment où le dispositif de conditionnement devrait être remplacé au lieu d'être régénéré.

**6.** Procédé selon l'une des revendications précédentes, **caractérisé en ce que** le dispositif de conditionnement (1) est un élément de filtre (6) servant à purifier des fluides (7), dans lequel la résistance d'écoulement augmente lorsque la consommation augmente.

**7.** Procédé selon l'une des revendications précédentes, **caractérisé en ce que**, en tant que valeurs de mesure (Sdp; Sv) pour l'obtention de l'état d'utilisation du dispositif de fonctionnement (1), on mesure la perte de pression (DP) dans le dispositif de fonctionnement (1) et la quantité (V) du fluide (7) qui traverse le dispositif de conditionnement (1).

**8.** Procédé selon l'une des revendications précédentes, **caractérisé en ce que** la duré de vie maximale (ΔT3) et/ou la capacité maximale jusqu'à l'utilisation technique complète du dispositif de conditionnement (1) sont déterminées par extrapolation à partir de la variation dans le temps de l'état d'utilisation déterminé du dispositif de conditionnement (1) moyennant l'adjonction de valeurs d'expérience ou de fonctions d'expérience mémorisées, et sont affichées.

**9.** Procédé selon l'une des revendications précédentes, **caractérisé en ce que** la détermination des valeurs de mesure (Sdp; Sv) s'effectue pendant des intervalles de temps (ΔTa) pouvant être prédéterminés, notamment dans des intervalles de 1 minute à 24 heures.

**10.** Procédé selon l'une des revendications précédentes, selon lequel le dispositif de conditionnement (1) contient un filtre (4) qui est disposé entre une canalisation d'arrivée (2) et une canalisation de départ (3) et comporte un élément de filtre (6), et selon lequel, en supposant des débits quantitatifs de fluide prédéterminés approximativement constants (V), la pression différentielle (DP) dans le filtre (4) est mesurée en tant que valeur de mesure (Sdp), **caractérisé par** les étapes suivantes :

a. calcul et mémorisation d'une baisse de puissance (ΔN), que provoque le salissement de l'élément de filtre (6) en raison de la pression différentielle accrue (DP), qui y est liée, en fonction ((ΔN = f(DP) de la pression différentielle (DP) dans une mémoire de fonction (20) de l'unité électronique d'évaluation (16) ;
b. détermination de la pression différentielle instantanée (Dpa) pendant des intervalles de temps prédéterminés (ΔTa) à partir des valeurs de mesure (Sdp) ;
c. détermination de la baisse de puissance instantanée (ΔN(n)) sur la base de la fonction (ΔN=f(DP)) mémorisée dans la mémoire de fonction (20) ;
d. détermination de la baisse d'énergie instantanée (ΔEa), que la baisse de puissance déterminée (ΔN) a provoquée pendant le dernier intervalle de temps (ΔTa), notamment conformément à la formule

$$\triangle Ea \ = \triangle Ta \ * \ (\triangle N(n) + \triangle N \ (n\text{-}1)) \ / \ 2,$$

la baisse de puissance instantanée ΔN(n-1) étant valable au début du dernier intervalle (ΔTa) et la baisse de puissance instantanée ΔN(n) étant valable à la fin du dernier intervalle de temps (ΔTa) ;
e. formation d'une somme d'énergie (ΔE) de préférence de toutes les baisses d'énergie instantanées (ΔEa), qui sont apparues pendant toutes les intervalles de temps (ΔTa) additionnés pour former une intervalle de temps global (ΔT1), depuis le début du fonctionnement du filtre (4), avec un élément de filtre propre (6) ;
f. formation d'une somme de coûts (ΣK) de préférence selon la formule ΣK = ΔE * X * Kk + Ks, qui apparaîtraient globalement lors d'un remplacement ou d'une régénération de l'élément de filtre (6) à l'instant présent (T1), X désignant les coûts de l'unité d'énergie, Kk les coûts du nouvel élément de filtre (6) ou les coûts de régénération de l'élément de filtre (6), et Ks d'autres coûts liés au fonctionnement du filtre (4) et à la régénération ou au remplacement et à la mise au rebut de l'élément de filtre sale (6) ;
g. calcul des coûts de fonctionnement de préférence moyens par unité de temps (Kbm) pour l'intervalle de temps global (ΔT1), conformément à la formule Kbm -= ΣK / ΔT1 ;
h. calcul de la dérivée instantanée en fonction du temps (t) des coûts de fonctionnement moyens par unité de temps, notamment conformément à la formule
A(n) = (Kbm(n) - Kbm(n-1)) / ΔTa, et mémorisation de cette valeur de la pente instantanée (A(n)) dans une mémoire des valeurs de fonctionnement (21) ;
i. déclenchement d'un affichage d'avertissement sur un appareil d'affichage (24) lorsque la pente instantanée (A(n)) possède une valeur égale ou supérieure à zéro.

**11.** Procédé selon la revendication 10, selon lequel au lieu de l'hypothèse d'un débit quantitatif fluidique prédéterminé (V) constant, on mesure ce dernier en tant que valeur de mesure (SV) et on en tient compte lors du calcul de la

baisse de puissance ($\Delta$N).

**12.** Procédé selon l'une des revendications précédentes, **caractérisé en ce que**, dans le cas d'un remplacement ou d'une régénération de l'élément de filtre (6), une mémorisation de données de fonctionnement caractéristiques pour l'évaluation de longue durée est exécutée dans la mémoire de valeurs de fonctionnement (21) pour le cycle de fonctionnement terminé et pour le début du nouveau cycle de fonctionnement.

**13.** Procédé selon l'une des revendications 10, 11 ou 12, **caractérisé en ce qu'**à partir de l'allure de la fonction des coûts de fonctionnement moyens par l'unité de temps (Kbm) en fonction du temps (t), on détermine une tendance de cette fonction et un signal de réserve de fonctionnement (Sbr) est produit en fonction de la tendance déterminée.

**14.** Procédé selon la revendication 13, **caractérisé en ce que**

- un signal de durée de vie restante (Srld) est formé à partir du signal de réserve de fonctionnement (Sbr),
- qu'une durée de vie restante ($\Delta$T2) à laquelle on s'attend jusqu'au remplacement recommandé ou jusqu'à la régénération recommandée de l'élément de filtre (6), est déterminée à partir de l'amplitude du signal de durée de vie restante (Srld),
- que la suite de la variation dans le temps des coûts de fonctionnement moyens par unité de temps (Kbm) est déterminée à partir d'un nombre de m+1 pentes (A(n), A(n-1), A(n-2), ... (An-m) de la courbe des coûts de fonctionnement, m possédant de préférence une valeur égale au moins à trois,
- que l'instant, auquel les coûts de fonctionnement par unité de temps (Kbm) prennent une valeur minimale et la pente (An) est égale ou supérieure à zéro, est calculé.

**15.** Procédé selon la revendication 14, **caractérisé en ce qu'**on détermine comme durée de vie restante ($\Delta$T2), l'intervalle de temps entre l'instant (T1), décrit par l'intervalle de temps global ($\Delta$T1), et l'instant auquel les coûts moyens de fonctionnement par unité de temps (Kbm) prendront leur valeur minimale.

**16.** Procédé selon l'une des revendications 13 à 15, **caractérisé en ce qu'**à partir du signal de réserve de fonctionnement (Sbr), la durée de vie restante ($\Delta$T2) est affichée sur un appareil d'affichage (24).

**17.** Procédé selon l'une des revendications 10 à 16, **caractérisé en ce que** les coûts introduits (X) d'une unité de temps incluent des coûts de l'unité d'énergie électrique et un rendement de production de pression pour le fluide (7).

**18.** Procédé selon l'une des revendications précédentes, **caractérisé en ce que** dans le cas d'un dispositif de conditionnement régénérable (1), les effets d'une modification de l'état de fonctionnement, qui subsistent après la régénération respective, notamment d'un salissement résiduel, sur les coûts de fonctionnement de l'ensemble de l'installation et/ou sur les coûts de régénération sont déterminés au moins approximativement à partir de la multiplicité des données de fonctionnement qui caractérisent, après des régénérations exécutées du dispositif de conditionnement (1), notamment d'un élément de filtre (6), le cycle de fonctionnement respectivement terminé au début du cycle de fonctionnement du nouveau cycle de fonctionnement respectivement mémorisés, et à partir de là les coûts totaux de fonctionnement y compris les coûts de régénération incidents, peuvent être calculés notamment lors d'un contrôle superposé.

**19.** Procédé selon la revendication 18, **caractérisé en ce qu'**un signal indiquant qu'à un instant, un remplacement d'au moins une partie du dispositif de fonctionnement est plus économique que la poursuite du fonctionnement avec des régénérations, est délivré à un appareil d'affichage (24) associé au dispositif de fonctionnement (1).

**20.** Dispositif de contrôle et/ou d'affichage, axé sur le coût, de l'état de fonctionnement d'un dispositif de conditionnement remplaçable ou régénérable (1), parcouru par un fluide (7), à savoir un dispositif ou une installation, qui élimine des impuretés mécaniques ou chimiques d'un fluide ou retire des substances contenues à l'état dissous ou modifie la température ou l'état d'agrégation du fluide, notamment d'un filtre (4), dans une installation complète, dans laquelle à l'aide d'au moins un capteur (9;10;11) est mesurée en continu ou à des intervalles au moins une valeur de mesure (Sdp; Sv), à partir de laquelle l'état d'utilisation du dispositif de fonctionnement (1) peut être obtenu, le dispositif présentant les caractéristiques suivantes :

- au moins un capteur (9,10;11) pour produire des valeurs de mesure (Sdp; Sv), à partir desquelles l'état d'utilisation du dispositif de conditionnement (1) peut être déterminé dans une unité électronique d'évaluation (16),

- une unité électronique d'évaluation (16) associée au dispositif de conditionnement (1) et comportant une unité d'entrée (23) pour des données et au moins une entrée de valeurs de mesure (18),
- des mémoires non volatiles (19) pour des valeurs pouvant être prédéterminées de coûts d'énergie, de coûts de régénération et/ou de remplacement du dispositif de conditionnement (1) et/ou des relations fonctionnelles de paramètres ainsi que la mémorisation de longue durée de données de fonctionnement étant présentes dans l'unité d'évaluation électronique (16), et
- l'unité électronique d'évaluation (16) comporte une unité de calcul (22) pour calculer les coûts pour un échange ou une régénération du dispositif de conditionnement en fonction de données mémorisées dans l'unité électronique d'évaluation et/ou de conditions fonctionnelles, et pour comparer ces coûts aux effets de l'état d'utilisation sur les coûts de fonctionnement de l'installation complète, et une unité de sortie (26) pour commander un appareil d'affichage (24) ou pour délivrer un signal par l'intermédiaire d'une sortie supplémentaire de signal (38) ; et
- un appareil d'affichage (24) pour afficher l'instant, obtenu dans l'unité électronique d'évaluation (16), où le remplacement ou la régénération est globalement plus économique que la poursuite du fonctionnement jusqu'à la défaillance technique complète du dispositif de fonctionnement (1).

21. Dispositif selon la revendication 20, **caractérisé en ce qu'**il contient les composants suivants :

- un capteur de pression (10), qui délivre la valeur de mesure (Sdp) caractérisant la pression différentielle (DP) de l'élément de filtre (6) ;
- un transducteur (25 pour recevoir les valeurs de mesure (Sdp) par l'intermédiaire d'entrées de valeurs de mesure (18) et/ou déterminer la pression différentielle instantanée (Dpa) à partir des valeurs de mesure (SDP) .
- une mémoire de fonctions (20), de préférence pour mémoriser une baisse de puissance ($\Delta$N) en fonction de la pression différentielle (DP) de l'élément de filtre (6) en tant que variables d'une fonction ($\Delta$N=f (DP)) ;
- des moyens pour introduire une fonction et/ou une grandeur de coût (X; Kk; Ks) et/ou un intervalle de temps ($\Delta$Ta) ;
- une unité de calcul (22) comportant une mémoire (19) et/ou une mémoire de valeurs de fonctionnement (21) ;
- des moyens pour produire un signal de réserve de fonctionnement (Sbr) ;
- des moyens pour afficher le signal de réserve de fonctionnement (Sbr).

22. Dispositif selon la revendication 21, **caractérisé en ce qu'**il est prévu en supplément un capteur de débit (11) qui délivre des valeurs de mesure (Sv) caractérisant le débit quantitatif fluidique (V) et dont les valeurs de mesure (Sv) sont également envoyées à l'unité de calcul (22), la mémoire de fonctions contenant de préférence la baisse de puissance ($\Delta$N) en fonction de la pression différentielle (DP) de l'élément de filtre (6) et du débit quantitatif fluidique (V) en tant que variables d'une fonction ($\Delta$N = f (DP;V)).

23. Dispositif selon la revendication 20, 21 ou 22 **caractérisé en ce que** ce dispositif est associé directement dans l'espace à un dispositif de conditionnement (1), notamment un filtre (4) ou un boîtier de filtre (5, 5a, 5b).

24. Dispositif selon l'une des revendications 20 à 23, **caractérisé en ce qu'**au moins une partie du dispositif peut être reliée par une liaison amovible, contenant des contacts électriques (54), au reste du dispositif.

25. Dispositif selon la revendication 24, **caractérisé en ce que** ce dispositif comporte un clavier amovible et/ou un dispositif d'affichage amovible.

26. Dispositif selon l'une des revendications 20 à 25 **caractérisé en ce que** l'unité d'évaluation comporte une unité électronique de mesure.

27. Dispositif selon l'une des revendications 20 à 26, **caractérisé en ce qu'**un capteur de pression (10) est présent en amont de l'élément de filtre (6) et en aval de l'élément de filtre (6).

28. Dispositif selon l'une des revendications 20 à 26, **caractérisé en ce que** le capteur de mesure, qui délivre la valeur de mesure caractéristique (Sdp) de la pression différentielle (DP) dans l'élément de filtre (6), est un capteur de pression (12), qui est raccordé en aval de l'élément de filtre (6) et mesure la baisse de pression par rapport à la pression ambiante, et que la canalisation d'arrivée (2) du filtre (4) reçoit le fluide (7), notamment de l'air, provenant de l'environnement (32).

29. Dispositif selon l'une des revendications 21 à 26, **caractérisé en ce que** le système de mesure de pression différentielle (13) comporte une sortie électrique analogique.

**30.** Dispositif selon l'une des revendications 20 à 29, **caractérisé en ce que** ce dispositif comporte un capteur (11) mesurant de débit fluidique quantitatif (V).

**31.** Dispositif selon la revendication 30, **caractérisé en ce que** le capteur de débit (11) est un système de mesure de pression différentielle (13) qui mesure la pression dynamique du fluide en circulation (7).

**32.** Dispositif selon la revendication 30, **caractérisé en ce que** le capteur de débit (11) est un capteur de vitesse de rotation (15) qui mesure la vitesse de rotation d'une machine de travail branchée en aval du filtre (4).

**33.** Dispositif selon la revendication 30, **caractérisé en ce que** le capteur de débit (11) est un capteur de vitesse de rotation (15) qui mesure la vitesse de rotation de la pompe (33) produisant le courant du fluide (V).

**34.** Dispositif selon l'une des revendications 20 à 33, **caractérisé en ce que** la durée de vie restante ($\Delta$T2) peut être affichée sur un appareil d'affichage (27;28;29).

**35.** Dispositif selon l'une des revendications 20 à 34, **caractérisé en ce qu'**une batterie (30) ou un accumulateur est présent en tant que source d'énergie.

**36.** Dispositif selon l'une des revendications 20 à 34, **caractérisé en ce que** le dispositif possède une liaison à un réseau d'alimentation en courant (31).

**37.** Dispositif selon l'une des revendications 20 à 36, **caractérisé en ce que** l'ensemble du dispositif est intégré dans un boîtier (5a; 5b) d'un dispositif de conditionnement, notamment d'un filtre (4).

**38.** Dispositif selon l'une des revendications 20 à 36, **caractérisé en ce que** l'ensemble du dispositif est intégré dans un boîtier (17), qui est fixé à un boîtier (5) du filtre (4).

**39.** Dispositif selon l'une des revendications 20 à 36, **caractérisé en ce que** l'unité d'évaluation électronique est fixée directement au dispositif de conditionnement (1).

**Fig. 1**

**Fig. 2**

Fig. 3

Fig. 4

**Fig. 5**

Fig. 6

Fig. 7

Fig. 8

29